(19) Europäisches Patentamt
European Patent Office
Office européen des brevets

(11) **EP 3 979 143 A1**

(12) **EUROPEAN PATENT APPLICATION**
published in accordance with Art. 153(4) EPC

(43) Date of publication:
**06.04.2022 Bulletin 2022/14**

(51) Int Cl.:
***G06N 3/063*** *(2006.01)*

(21) Application number: **20870174.8**

(22) Date of filing: **22.09.2020**

(86) International application number:
**PCT/CN2020/116820**

(87) International publication number:
**WO 2021/057722 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2019 CN 201910910116**

(71) Applicant: **Anhui Cambricon Information
Technology Co., Ltd.
Hefei, Anhui 231283 (CN)**

(72) Inventors:
• **ZHANG, Xiao
Hefei, Anhui 231283 (CN)**
• **ZHOU, Yusong
Hefei, Anhui 231283 (CN)**
• **MENG, Xiaofu
Hefei, Anhui 231283 (CN)**

(74) Representative: **Huang, Liwei
Cäcilienstraße 12
40597 Düsseldorf (DE)**

(54) **METHOD OF PERFORMING SPLITTING IN NEURAL NETWORK MODEL BY MEANS OF MULTI-CORE PROCESSOR, AND RELATED PRODUCT**

(57) Embodiments of the present application disclose a method of performing splitting in a neural network model by means of a multi-core processor, and related products. The method comprises: when a splittable operator is present in the neural network model, splitting the operator, and selecting an optimal splitting combination to obtain an optimal splitting result of the entire neural network model, and then executing a sub-operator corresponding to the optimal splitting result by means of multi-core parallel processing. The invention thus achieves the purpose of reducing resource consumption of a computer device.

FIG. 5

## Description

### TECHNICAL FIELD

The present disclosure relates to the technical field of deep learning, and specifically to a method of performing splitting in a neural network model by means of a multi-core processor and related products.

### BACKGROUND

In recent years, neural network processors have been continuously proposed and are expanding from single core to multiple cores like general-purpose processors. The multi-core structure after expanding may improve data throughput and accelerate training speed in a training phrase by supporting data parallelism. However, in a reasoning phrase, compared with the throughput, a deep neural network may have a higher requirement for end-to-end delay, which often determines the availability of an accelerator in a certain scenario. Traditional data parallelism solutions may not meet the requirements of acceleration and low delay in reasoning scenarios with small data scales.

### SUMMARY

In order to achieve the above purpose, a first aspect of the present disclosure provides a method of performing splitting in a neural network model by means of a multi-core processor, and the method may include:

determining an original split state set of tensor data associated with an operator of a target operator according to the operator of the target operator in the neural network model, where the target operator is at least one layer in the neural network model;
inserting a glue operator between the operator of the target operator and the original split state set to adjust split states in the split state set of the tensor data of the operator to obtain an adjusted split state set, where the glue operator is used to convert sub-tensor data obtained by splitting the tensor data according to one splitting method into sub-tensor data obtained according to another splitting method;
traversing the adjusted split state set to determine splitting paths of the tensor data of the operator between adjacent split state sets;
determining a target splitting path of the tensor data of the target operator according to weights of the splitting paths; and
splitting the tensor data of the target operator in the neural network model according to the target splitting path to distribute the tensor data to the corresponding core of the multi-core processor for processing.

A second aspect of the present disclosure provides an apparatus of performing splitting in a neural network model by means of a multi-core processor, and the apparatus may include:

a first determining unit configured to determine an original split state set of tensor data associated with an operator of a target operator according to the operator of the target operator in the neural network model, where the target operator is at least one layer in the neural network model;
an adjusting unit configured to insert a glue operator between the operator of the target operator and the original split state set to adjust split states in the split state set of the tensor data of the operator to obtain an adjusted split state set, where the glue operator is used to convert sub-tensor data obtained by splitting the tensor data according to one splitting method into sub-tensor data obtained according to another splitting method;
a traversing unit configured to traverse the adjusted split state set to determine splitting paths of the tensor data of the operator between adjacent split state sets;
a second determining unit configured to determine a target splitting path of the tensor data of the target operator according to weights of the splitting paths; and
a splitting unit configured to split the tensor data of the target operator in the neural network model according to the target splitting method to distribute the tensor data to the corresponding core of the multi-core processor for processing.

A third aspect of the present disclosure provides a chip including the neural network model processing apparatus provided in the second aspect.
A fourth aspect of the present disclosure provides a computer device including the chip provided in the third aspect or the neural network model processing apparatus provided in the second aspect.
A fifth aspect of the present disclosure provides a computer device including a processor and a memory that are connected to each other, and the processor may include a general-purpose processor and an artificial intelligence processor. The memory may be configured to store a computer program that supports the computer device to perform the above method, and the computer program includes a program instruction. The processor may be configured to invoke the program instruction to perform the above method provided in the first aspect.

A sixth aspect of the present disclosure provides a computer readable storage medium on which a computer program is stored, where the computer program may include a program instruction, and the program instruction enables a processor to implement the above method provided in the first aspect when the program instruction is executed by the processor.

A seventh aspect of the present disclosure provides a computer program product including a non-transitory computer readable storage medium that stores a computer program. The computer program may be executed to enable a computer to perform some or all of the steps described in the method of the first aspect of the embodiments of the present disclosure. The computer program product may be a software installation package.

In the embodiments of the present disclosure, the computer device may obtain an original split state set corresponding to tensor data by splitting tensor data associated with an operator in the neural network model, and obtain an adjusted split state set by adjusting the split state set of the tensor data associated with the operator by means of a glue operator, and then determine a target splitting path of the tensor data of the target operator between adjacent split state sets according to the split state set of the tensor data associated with the target operator, and finally split the tensor data of the target operator according to the target splitting path to distribute the tensor data to the corresponding core of the multi-core processor for processing. On the one hand, through splitting operators by splitting the tensor data corresponding to the operators, modification and reconstruction of original instruction implementations of each operator may be avoided when the operators are split in parallel on multiple cores. In this process, in order to reduce mutual constraints between interconnected layers in the neural network model due to different splitting methods of the tensor data caused by different operator characteristics, the glue operator is added to adjust the splitting methods of the tensor data to increase the executability of the neural network processor in invoking the neural network model. On the other hand, through splitting the tensor data associated with the operator, a computational data scale of the operator may be reduced, and then according to a selection of splitting paths corresponding to split states of the tensor data, the splitting methods of the tensor data may be further optimized. Finally, through distributing the tensor data obtained by splitting to the multi-core processor, hardware resources of each core in the multi-core processor may be effectively utilized. This solution may effectively reduce end-to-end delay of various neural network models on the multi-core processor.

**Brief Description of the Drawings**

In order to illustrate technical solutions in the embodiments of the present disclosure more clearly, drawings to be used in the description of the embodiments are briefly explained below. Obviously, the drawings in the description below are some embodiments of the present disclosure. Other drawings may be obtained according to the disclosed drawings without any creative effort by those skilled in the art.

FIG.1A is a schematic diagram of a software stack for an artificial intelligence processor.

FIG. 1B is a schematic diagram of an operator splitting based on a calculation graph according to an embodiment of the present disclosure.

FIGs. 1C to 1H are schematic diagrams illustrating a convolution operator splitting method in the case that the degree of parallelism is 2 according to an embodiment of the present disclosure.

FIG. 2 is a schematic structural diagram of a computer device according to an embodiment of the present disclosure.

FIG. 3 is a flowchart of a method of performing splitting in a neural network model by means of a multi-core processor according to an embodiment of the present disclosure.

FIG. 4 is a schematic diagram of an operator connection relationship in a neural network model according to an embodiment of the present disclosure.

FIG. 5 is a schematic diagram of a convolution operator splitting according to an embodiment of the present disclosure.

FIG. 6 is a schematic diagram of a split state set according to an embodiment of the present disclosure.

FIG. 7 is a schematic diagram of an adjustment process by means of Transform according to an embodiment of the present disclosure.

FIG. 8A is a schematic diagram of semantics of an operator Concat according to an embodiment of the present disclosure.

FIG. 8B is a schematic diagram of semantics of an operator Split according to an embodiment of the present disclosure.

FIG. 9 is a schematic diagram of inserting Transform to obtain a split state according to an embodiment of the present disclosure.

FIG. 10 is a schematic diagram of a splitting path between split states according to an embodiment of the present disclosure.

FIG. 11 is a schematic diagram of a residual block in a deep residual network according to an embodiment of the present disclosure.

FIG. 12 is a schematic structural diagram of an apparatus of performing splitting in a neural network mode by means of a multi-core processor according to an embodiment of the present disclosure.

## Detailed Description of the Embodiments

Technical solutions in embodiments of the present disclosure will be described hereinafter with reference to the accompanied drawings in the embodiments of the present disclosure.

It should be understood that the terms such as "first", "second", and "third" appear in the claims, the specification, and drawings are used for distinguishing different objects rather than describing a specific order. It should be understood that the terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely for the purpose of describing particular embodiments rather than limiting the present disclosure. As being used in the specification and the claims of the disclosure, unless the context clearly indicates otherwise, the singular forms "a", "an", and "the" are intended to include the plural forms. It should also be understood that the term "and/or" used in the specification and the claims refers to any and all possible combinations of one or more of relevant listed items and includes these combinations.

As being used in this specification and the claims, the term "if" can be interpreted as "when", or "once" or "in response to a determination" or "in response to a case where something is detected" depending on the context. Similarly, depending on the context, the clause "if it is determined that" or "if [a described condition or event] is detected" can be interpreted as "once it is determined that", or "in response to a determination", or "once [a described condition or event] is detected", or "in response to a case where [a described condition or event] is detected".

In order to better understand the technical solutions described in the present disclosure, the technical terms involved in the embodiments of the present disclosure are explained first hereinafter.

(1) Tensor:

In this technical solution of the present disclosure, a tensor is only a feature description of a piece of data stored and the tensor records information such as the shape and type of the data.

In the embodiments of the present disclosure, the tensor should be understood as tensor data, including input tensor data and output tensor data in the neural network model as well as feature tensor data.

Taking an artificial intelligence deep learning framework TensorFlow as an example, terms such as rank, shape and dimension number are generally used to describe the dimensions of the tensor, and the related relationships may be represented by the following table 1.

Table 1

| Rank | Shape | Dimension number | Examples |
|------|-------|------------------|----------|
| 0 | [] | 0-D | 4 |
| 1 | [D1] | 1-D | [2] |
| 2 | [D1,D2] | 2-D | [6,2] |
| 3 | [D1,D2,D3] | 3-D | [7,3,2] |
| n | [D1,D2,D3, ...,Dn] | n-D | Tensors with the shape of [D1,D2,D3, ..., Dn] |

As shown in table 1, the tensor A is equal to 4, which represents a number. The tensor A is equal to [6, 2], which represents a two-dimensional matrix. Specifically, the matrix is a matrix with 6 rows and 2 columns.

(2) Data parallelism

Specifically, data parallelism refers to dividing the data into several blocks and mapping the blocks to different processors, where each processor executes a same processing program to process the distributed data. In the prior art, most of parallel processing adopts this processing method, especially for problems with high computational complexity, such as hydromechanics calculation, image processing, and the like.

In the embodiments of the present disclosure, the data parallelism may be applied to large-scale neural network parallel trainings. Specifically, the core of data parallelism is to use a plurality of processors to train a same neural network model simultaneously. In each iteration of training, each processor may obtain the data to be used in this iteration from a dataset and complete a round of reasoning and training calculation of the entire network and return the gradient data obtained in this iteration to update the model. After receiving the gradients of all processors, the server for maintaining weights may use these gradients to update the model data. Clearly, since a plurality of processors may perform the training task in parallel, which means that a larger batch of data that may be processed in each iteration, time required by the system to complete the training task may be reduced. Therefore, the key of data parallelism lies in a batch size of the data to be processed in each iteration, in other words, if the batch of the data to be processed is larger, the data is divided into more processors for processing in parallel.

(3) Model parallelism

In the embodiments of the present disclosure, model parallelism is another neural network parallel calculation mode in addition to data parallelism. In other words, the model parallelism refers to distributing calculation load to different processors by dividing neural network model parameters.

(4) Multi-core processor

The most common structure currently used in multi-core processors is a multi-core structure based on memory sharing. The processor may include a plurality of computing cores, and each computing core may include an independent caching unit, a register file, a computing unit and an instruction control unit, and all computing cores may share a same global memory.

In the prior art, a single core is sufficient for any calculation task with logic complexity, but the performance of the single core is limited by Moore's Law and chip technology. In order to further improve the performance of processors, a plurality of computing cores are introduced into processors. A plurality of computing cores may be used to process the calculation tasks with a high degree of parallelism.

In practical applications, a shared memory multi-core structure is a classical multi-core structure and is very suitable for the neural network training method that adopts data parallelism. In this structure, each core may be used as a processor in the data parallelism and read different pieces of data respectively to complete the forward and backward calculation of the network model in parallel. Each core may maintain its good performance power ratio under the previous single-core structure in a calculation phrase, and at the same time, the throughput of the entire system may also increase with the expansion of the number of cores.

(5) Operator splitting

In the embodiments of the present disclosure, an operator splitting may be used to implement the division of calculation tasks, in other words, a single operator may be split to several sub-operators that may be executed in parallel. It needs to be noted that here both the original operator before the splitting and the several sub-operators after the splitting are the operators supported by the artificial intelligence processor and the original tensor data is divided into several pieces of new sub-tensor data with the operator splitting. Corresponding to the calculation graph, the original calculation graph containing a single operator may be divided into a calculation graph containing more operators that may be executed in parallel. In this way, the task division within the operators similar to model parallelism may be realized, and at the same time, each sub-operator after the splitting may reuse the instruction implementations of the operator under the single-core structure to calculate, which may avoid the reconstruction of the instruction implementations of the original operator.

In the embodiments of the present disclosure, the operator splitting is not only limited to split the model parameters, but also splits data by means of data parallelism, which actually blurs the boundary between model parallelism and data parallelism. Taking a convolution operator as an example, if taking the input data and weight of the convolution operator as the tensor data in the calculation graph, the division of calculation is based on the splitting of input data when performing data parallelism, while the division of calculation is based on the splitting of weight when performing model parallelism. Both the two parallelism divide the calculation load by splitting the tensor data associated with the convolution operator. Based on the above example, data parallelism and model parallelism are unified.

(6) Artificial intelligence processor

An artificial intelligence processor is also called a dedicated processor. In the embodiments of the present disclosure,the artificial intelligence processor refers to a processor specialized in specific applications or domains. For example, a graphics processing unit (GPU), also known as a display core, a vision processor, and a display chip, is a dedicated processor for image computation on personal computers, workstations, game consoles, and some mobile devices (such as tablet computers, smart phones, and the like). For another example, a neural-network processing unit (NPU) is a dedicated processor for a matrix multiplication operation in the field of artificial intelligence applications. The processor adopts a structure of data-driven parallel calculation and specializes in processing massive multimedia data of video and image.

(7) Software stack for artificial intelligence processors

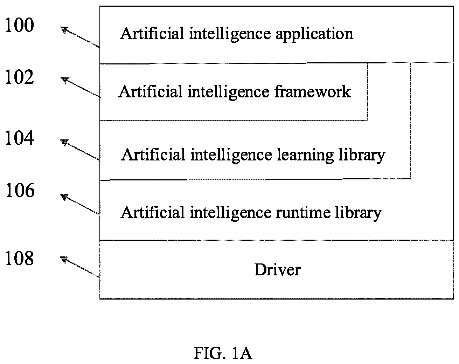

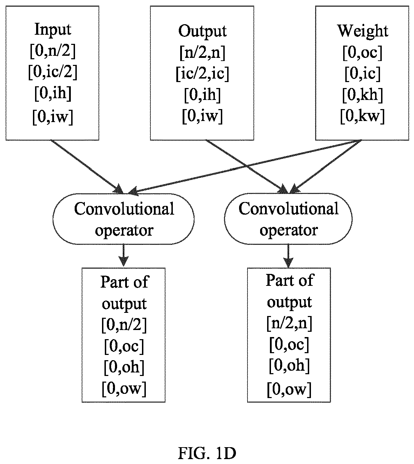

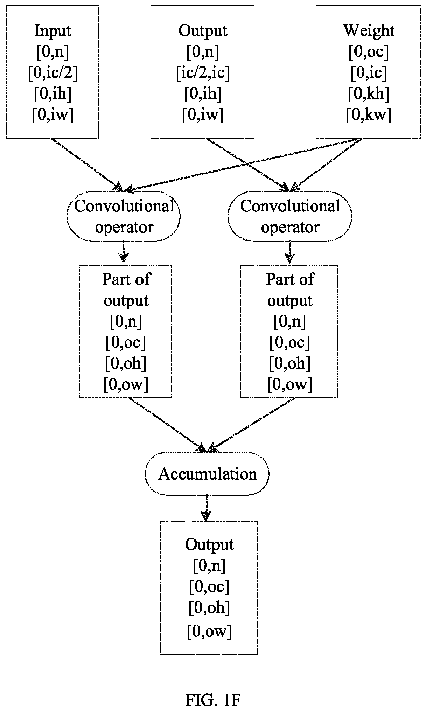

Referring to FIG.1A, a software stack structure 10 may include an artificial intelligence application 100, an artificial intelligence framework 102, an artificial intelligence learning library 104, an artificial intelligence runtime library 106, and a driver 108. The detailed explanation will be made below.
The artificial intelligence application 100 may provide the corresponding artificial intelligence algorithm models according to different application scenarios. The algorithm models may be directly parsed by a programming interface of the artificial intelligence framework 102. In one of the possible implementations, the artificial intelligence algorithm models may be converted to binary instructions by invoking the artificial intelligence learning library 104, and the binary instructions may be converted to artificial intelligence learning tasks by invoking the artificial intelligence runtime library 106, and the artificial intelligence learning tasks may be placed on a task queue and then invoked by the driver 108 to be executed by the underlying artificial intelligence processor. In another one of the possible implementations, the artificial intelligence runtime library 106 may be directly invoked to run the off-line operating files generated by the above process to reduce the intermediate overhead of the software structure and improve the operating efficiency.
The artificial intelligence framework is a first layer of the entire deep learning ecosystem. Early on, in a convolutional architecture for fast feature embedding (CAFFE), a layer is regarded as a basic element for constructing a neural network. In later artificial intelligence frameworks such as TensorFlow and MXNet, although another name such as Operator is adopted, the core idea of operator is still similar to that of layer in the CAFFE, in other words, the calculation of the neural network may be further divided into various common operators for tensor data, and the artificial intelligence framework may need to embody the deep learning tasks expressed by the calculation graph structure of the neural network into instructions and data that may be executed on the CPU or the artificial intelligence processor. In this process, the artificial intelligence framework may adopt operators as specific elements for executing calculation tasks, which provides each operator with a kernel that may be executed on the CPU or the artificial intelligence processor. According to the calculation graph, the artificial intelligence framework may invoke and execute the kernel corresponding to each operator in the calculation graph to complete the calculation of the entire neural network.
In order to better understand the present disclosure, the research ideas of the technical solutions described in the present disclosure will be explained in detail below.
In the prior art, the problem of data parallelism is that its scalability depends on the batch size of the data to be processed. Although this is usually not a problem in the training phrase, this is not sure in the reasoning phrase. Generally, for the neural network model for real-time services (including video surveillance, autonomous driving, and the like), the data to be processed is usually inputed serially in the form of stream, resulting in a small data scale or even a single picture for each processing. In this case, the data parallelism does not provide any degree of parallelism, and all work tasks are concentrated on a single core, which makes the calculation resources brought by multiple cores may not be translated into the speed of processing tasks.
After completing the neural network model training by means of datasets offline, the model may be deployed in a cloud server to process the data from the outside world. At this time, the application scenario may change from an offline training to an online reasoning. In the online reasoning phrase, one of the important indexes is the delay, for example, the time that the server receives the data to be processed and then returns the processed result, further, the time of using the neural network model to process data. The low delay may ensure that the cloud server may respond to the data from a client terminal within the shortest time, and in some sensitive scenarios, the low delay may directly determine whether the solution may be applied. Therefore, in the online reasoning phrase, the requirements for artificial intelligence processors may change from processing large batches of data with high throughput to processing small batches of data with low delay.
In this case, traditional data parallelism or model parallelism is difficult to effectively reduce the delay of processing reasoning tasks. For data parallelism, having large batches of data is the premise, which is inconsistent with the small batches of data of the online reasoning. For model parallelism, it may be usually used to process a large scale neural network model that exceeds the memory limit of a single device, therefore, distributing operators to different cores may not reduce the delay of the network. In order to truly reduce the delay of reasoning tasks on multi-core processors, it is necessary to find a method of reasonably distributing the reasoning and calculation tasks of small batches of data or even a single piece of data to each core of the multi-core structure to ensure that as many cores as possible participate in the calculation at all times to make full use of the resources of the multi-core structure. One method is to split the calculation tasks of each operator in the neural network into multiple cores for calculation. This method may ensure that there are multiple cores at every moment even when processing the reasoning tasks of a single picture, so as to achieve the purpose of using multi-core resources to reduce delay.

However, for multi-core artificial intelligence processors, there still are many problems to be solved. First, the deep learning artificial intelligence processor needs to customize its own hardware design to adapt the data parallel characteristics of the deep learning algorithm itself and to improve the calculation throughput, and the artificial intelligence processor often needs sufficient data size to achieve high calculation efficiency, however, the further splitting within the operators may reduce the calculation scale of each core. When the splitting reaches a certain degree of granularity, on each core, the loss of the calculation efficiency may exceed the benefits brought by increasing the degree of parallelism through splitting. Therefore, there should be a balance between increasing the degree of parallelism through splitting and improving the calculation efficiency, in other words, a sufficient degree of parallelism is provided while a sufficient calculation efficiency is ensured.

Second, the neural network model may be regarded as a complex calculation graph consisting of often hundreds or even thousands of operators. Different kinds of operators have different algorithmic logic, which leads to different methods for splitting these operators. In addition to balancing the calculation efficiency and the degree of parallelism, the match between an operator in the front and an operator in the back also should be taken into the consideration when splitting each operator, even the overall impact of splitting. More and more complex networks with large scales have been brought by the quick development of deep learning. It is not practical to find a good parallel method manually, therefore, an automated method is needed to ensure that a good splitting and parallel strategy may be given for different networks.

Additionally, the portability to the underlying artificial intelligence processors may also be taken into the consideration. For the artificial intelligence processors that lack enough good programmability, the workload of modifying the software stack brought by the expansion from single core to multiple cores and the realization of splitting parallelism within the operators is extremely heavy. The traditional implementation of data parallelism and model parallelism is still based on the idea that a processing core completes the calculation tasks of an operator, therefore, not a lot of extra workload may be brought. However, the cross-core parallelism of a single operator requires modifying the implementation of the operator itself, and the difficulty of this modification depends on both the programmability of the artificial intelligence processor and the complexity of the original operator implementation logic. Therefore, how to reduce the extra overhead brought by implementing the low-delay reasoning process on the multi-core structure and reduce the dependency of the workload on the programmability of the artificial intelligence processor itself in the implementation process to make the method be applied to different multi-core artificial intelligence processors in the future may also be taken into consideration.

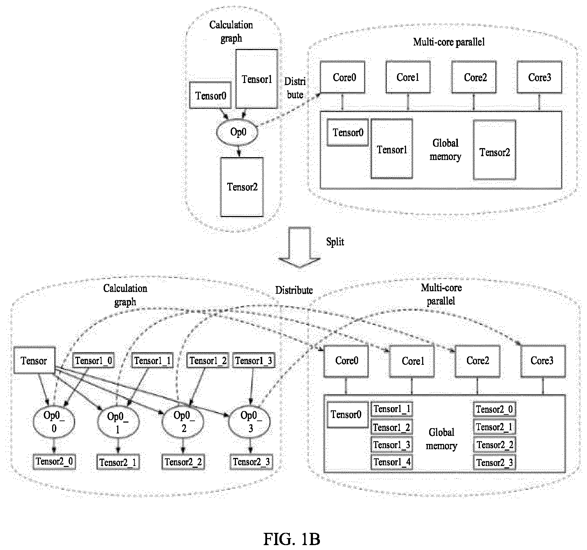

Based on the above description, the operator splitting method may be used to achieve the splitting of calculation tasks, in other words, a single operator may be split into a plurality of sub-operators that may be executed in parallel. Both the original operator before the splitting and the several sub-operators after the splitting are the meta-operators supported by the artificial intelligence processor, and the original tensor data is split into several pieces of new sub-tensor data with the operator splitting. FIG. 1B is a schematic diagram of an operator splitting based on a calculation graph according to an embodiment of the present disclosure. As shown in FIG.1B, an operator Op0 is converted from being executed on a single core Core0 to being executed on multiple cores including a Core0, a Core1, a Core2, and a Core3 in parallel through the operator splitting.

The operator splitting may imply the information about how to split the tensor data associated with the operator. The tensor data associated with the operator may include both the input tensor data and the output tensor data of the operator. For example, in FIG.1B, since the operator Op0 is split to four sub-operators, which are Opo0_0, Opo0_1, Opo0_2, and Opo0_3, the input tensor data Tensor 1 of the operator Op0 is split to Tensor1_0, Tensor1_1, Tensor1_2, and Tensor1_3 accordingly. In this way, the task division within the operators may be realized, and at the same time, each sub-operator after the splitting may reuse the instruction implementations of the operator under the single-core structure to calculate, which may avoid the reconstruction of the instruction implementations of the original operator, in other words, the operator instruction implementations of the sub-operators such as Opo0_0, Opo0_1, Opo0_2 and Opo0_3 are same with that of the operator Op0.

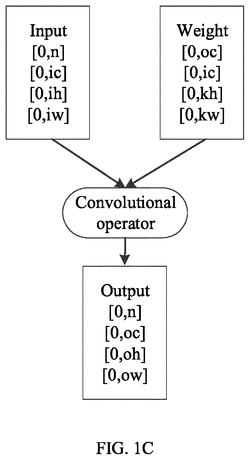

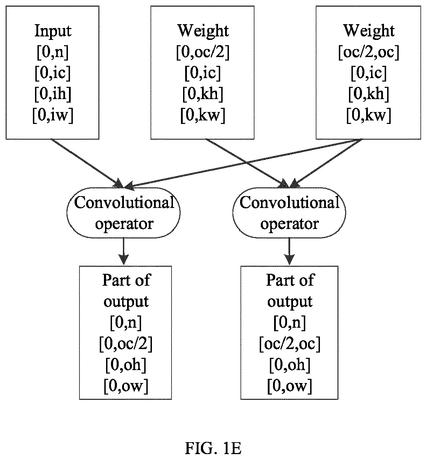

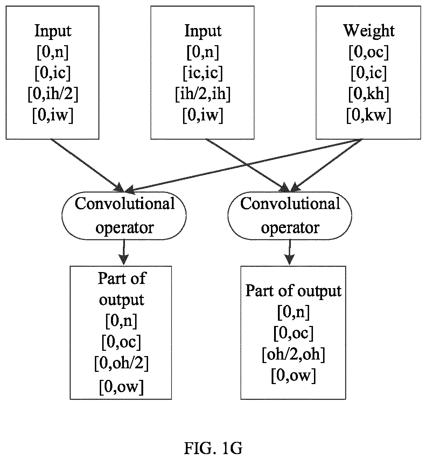

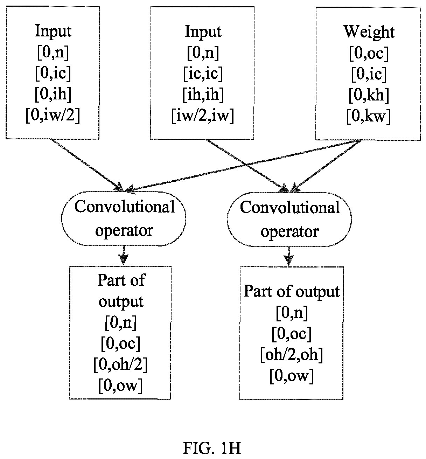

FIGs. 1C to 1H illustrate multiple methods of performing splitting in a convolution operator of the calculation graph in the case that the degree of parallelism is 2 according to an embodiment of the present disclosure. In FIGs. 1C to 1H, the starting point and ending point of each dimension of each piece of tensor data are provided, which are used to clarify the relationship between the split sub-tensor data and the original tensor data. In FIGs. 1C to 1H, terms such as n, ic, ih, iw, oc, oh, ow, kh and kw represent the batch size of the input tensor data, the count of the input tensor data feature map, the length of the input tensor data feature map, and the width of the input tensor data feature map, the count of the output tensor data feature map, the length of the output tensor data feature map, and the width of the output tensor data feature map, the length of convolution kernel window, and the width of convolution kernel window successively. Specifically, FIG. 1C is an original calculation graph; FIG. ID illustrates the splitting based on the N dimension of the input tensor data; FIG. 1E illustrates the splitting based on the C dimension of the output tensor data; FIG. IF illustrates the splitting based on the C dimension of the input tensor data; FIG. 1G illustrates the splitting based on the H dimension of the input tensor data; and FIG. 1H illustrates the splitting based on the W dimension of the input tensor data. These splitting methods are performed on different dimensions and at the same time may be combined with each other to form more new splitting methods, so as to provide the most sufficient degree of parallelism to utilize the multi-core resources and avoid excessive splitting on a single dimension to affect calculation efficiency to a certain extent.

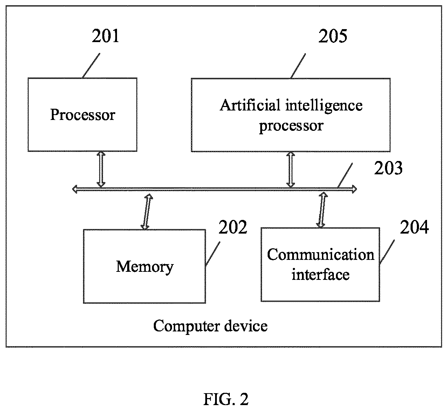

Referring to FIG. 2, FIG. 2 is a schematic structural diagram of a computer device according to an embodiment of the present disclosure. As shown in FIG. 2, a computer device 20 may include a general-purpose processor 201, a memory 202, a communication bus 203, a communication interface 204, and at least one artificial intelligence processor 205, where the general-purpose processor 201 and the artificial intelligence processor 205 are connected with the memory 202 and the communication interface 204 through the communication bus.

The general-purpose processor 201 may be a central processing unit (CPU), a general-purpose processor, a digital signal processor (DSP), an application-specific integrated circuit (ASIC), a field programmable gate array (FPGA), or other programmable logic devices, discrete gate or transistor logic devices, discrete hardware components, and the like. The general-purpose processor 201 may be a microprocessor or any conventional processor.

The general-purpose processor 201 may be an integrated circuit chip with signal processing capability. In the implementation process, each step of the operator splitting method of the present disclosure may be completed by the instructions of the general-purpose processor 201 that may be in the form of hardware such as an integrated logic circuit or in the form of software.

The memory 202 may be a read-only memory (ROM), a random access memory (RAM), and other memories. In the embodiments of the present disclosure, the memory 202 may be configured to store data and various software programs, for example, a program for optimizing the neural network model according to the positional relationships of the glue operator.

Optionally, in the embodiments of the present disclosure, the memory may include a physical apparatus for storing information, typically by digitizing the information and then storing the information in a medium using electrical, magnetic or optical means, and the like. The memory may also include apparatuses for storing information using electrical energy, such as the RAM, the ROM, and the like, apparatuses for storing information using magnetic energy, such as a hard disk, a floppy disk, a magnetic tape, a magnetic core memory, a magnetic bubble memory, and a USB flash disk, apparatuses for optically storing information, such as a compact disc (CD) or a digital versatile disc (DVD). Of course, the memory may also include memories using other manners, such as a quantum memory, a graphene memory, and the like.

The communication interface 204 may use transmitter-receiver sets, such as, but not limited to, transceivers, to implement the communication between the computer device 20 and other devices or communication networks. For example, the communication interface 204 may be used to receive a model file sent by other devices

The artificial intelligence processor 205 may be mounted on a host CPU as a co-processor, and the host CPU distributes tasks to it. In practical applications, the artificial intelligence processor 205 may perform one or more kinds of operations. Taking the NPU as an example, the core part of NPU is an arithmetic circuit, and the arithmetic circuit is controlled by a controller to extract matrix data in the memory 202 and perform multiplication and addition operations.

Optionally, the artificial intelligence processor 205 may include eight clusters, and each cluster may include four artificial intelligence processor cores.

Optionally, the artificial intelligence processor 205 may be an artificial intelligence processor with a reconfigurable structure. Here, the reconfigurable structure means that if an artificial intelligence processor may use reusablehardwareresources and flexibly change the structure according to different application requirements to provide the structure matched with each specific application requirement, the artificial intelligence processor is called a reconfigurable computing system, and the structure of the artificial intelligence processor is called the reconfigurable structure.

It should be understood that the computer device 20 is merely one example provided by an embodiment of the present disclosure, and that the computer device 20 may have more or fewer components than the components shown and may combine two or more components, or may have different implementations of components.

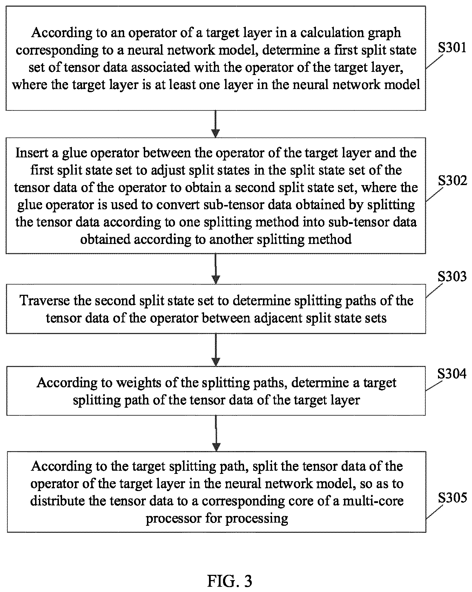

Taking the CAFFE as an example, in combination with the flowchart of the method of performing splitting in the neural network model by means of the multi-core processor according to an embodiment of the present disclosure provided in FIG.3, how the splitting method of the target operator is characterized by splitting the input tensor data of the target operator to further achieve the purpose of optimizing the computational process of the processor core in the embodiments of the present disclosure will be detailed in the following description. The description may include but is not limited to the following steps.

In step 301, the original split state set of the tensor data associated with the target operator may be determined according to the target operator in the calculation graph corresponding to the neural network model.

Under a CAFFE framework, the target operator may be a corresponding target layer in the neural network model. The target layer is at least one layer in the neural network model. The tensor data may include the input tensor data and the output tensor data.

In the embodiments of the present application, "neural network model" is also referred as model, such as "first neural network model", "second neural network model" or "third neural network model". The model may receive the input data and generate a predictive output according to the received input data and current model parameters. In practical applications, the predictive output may include an image detection output result, a semantic analysis output result, an image classification output result, and the like. The neural network model may include a deep neural network (DNN) model, a convolution neural network (CNN) model, an extreme learning machine (ELM) model, or other neural network models.

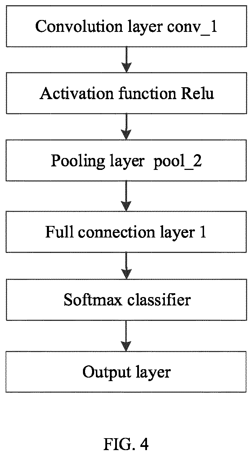

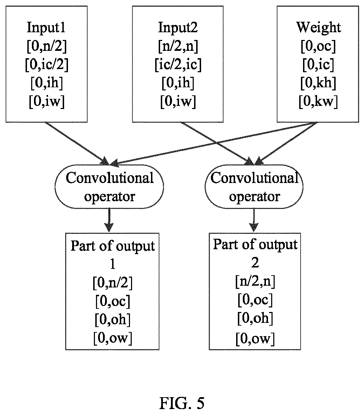

Under the CAFFE framework, the neural network model has a hierarchical structure. As shown in FIG.4, FIG. 4 is a schematic diagram of an operator connection relationship in a neural network model according to an embodiment of the present disclosure. The neural network model may include a convolution layer Conv, an activation function layer Relu, a pooling layer Pool, a classifier Softmax, and a full connection layer, where each layer may include at least one operator. The splitting method of the operator itself has a unique corresponding splitting method of the tensor data associated with it. Referring to FIG. 5, FIG. 5 is a schematic diagram of a convolution operator splitting according to an embodiment of the present disclosure. As shown in FIG. 5, input tensor data of a convolution operator Conv may include an input scale Input and a weight Weight. For an Input {[0, n], [0, ic] [0, ih], [0, iw]}, n represents the batch size of the input data; ic represents the data amount of input data feature map; ih represents the length of the input data feature map; and iw represents the width of the input data feature map. The splitting of n dimension may be performed to obtain the input sub-tensor data including an Input 1 {[0, n/2], [0, ic/2] [0, ih), [0, iw)} and an Input 2 {[n/2, n], [ic/2, ic) [0, ih), [0, iw)}. All sub-tensor data obtained by splitting the tensor data according to one method is referred as a split state s of the tensor data, and all possible states of the tensor data constitute a state space S of the tensor data. Assuming that the operator Op in the neural network model is split according to a certain splitting method, the input data Tensor0 and the output data Tensor1 may have a state s and a state t respectively, where the state s and the state t belong to a split state space S of the Tensor0 and a split state T of the Tensor1 respectively. At this time, the splitting method of the operator Op itself may be considered a directed edge from s to t. For example, (Input 1, Input 2) is the split state s. Assuming that output sub-tensor data of the convolution operator Conv in FIG. 5 is a Partial1{[0,n/2), [0,oc) [0,oh), [0,ow)} and a Partial2{[n/2,n), [0,oc) [0,oh), [0,ow)} and (Partial1, Partial2) is the split state t, the splitting method of the operator Conv itself may be considered the directed edge from s to t.

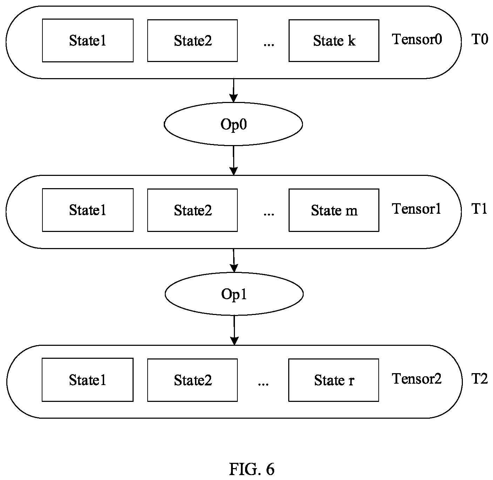

Theoretically, the tensor data associated with the operator may be split according to any method that may be executed by the operator. However, in an actual neural network model, the tensor data may often be associated with a plurality of operators. Referring to FIG. 6, FIG. 6 is a schematic diagram of a split state set according to an embodiment of the present disclosure. As shown in FIG. 6, the tensor data Tensor1 is both the output tensor data of the operator Op0 and the input tensor data of an operator Op1. When the operator Op0 is determined to be split in a certain way, as the output of the operator Op0, the Tensor1 is also determined to be split into a series of pieces of sub-tensor data in a certain way. Therefore, when the operator Op1 selects the splitting method, it must ensure that the selected method is compatible with the determined splitting method of the input tensor data Tensor1, which constrains the selection range of the operator Op1. Further, the splitting method selected by the operator Op1 under this constraint may constrain the splitting choices of other adjacent operators through the tensor data associated with it.

In an optional embodiment, the split states in the original split state set of the input tensor data of the target operator in the calculation grasp corresponding to the neural network model may be determined according to the computational logic of the target operator and the split states in the split state set of the corresponding output tensor data.

In the embodiments of the present disclosure, in consideration of different characteristics of different operators, in order to avoid a negative effect brought by unreasonable splitting methods, when splitting operators, the computer device may determine the splitting methods of the operators according to the types of the operator and then obtain the states of the original split state set.

The splitting methods of operators may include the following: (1) the operators support splitting in any dimension; (2) the operators support splitting in limited dimensions; (3) the operators do not support splitting. For example, both the operator ReLu and the operator Conv support the input data to be split in any dimension of NCHW (which represents the batch size of the input data, the count of the feature image, the length of the feature image, and the width of the feature image); some operators, such as the operator Softmax, support the input data to be split in certain specific dimensions; and some operators that are difficult to be implemented, such as non-maximum suppression (NMS) operators, are hard to distribute the calculation load to multiple cores in parallel by the operator splitting. Such operators may be executed on a single core ultimately and the corresponding input data may remain intact without splitting. The results of the splitting methods among the multi-layer operators influencing each other include: (1) full support; (2) partial support;

(3) nonsupport. If two operators connected to each other support splitting in any dimension, the previous splitting methods of the two operators are fully supported with each other, and the split state sets of the tensor data corresponding to the two operators may be obtained by splitting according to any dimension. If one of the two operators connected to each other support splitting in any dimension and another one does not support splitting or only supports splitting in limited dimensions, the splitting methods of the two operators are partially supported with each other, and the possible state split sets of the tensor data of the two operators are required to be intersected to obtain the split state set corresponding to the operators finally. If one of the two operators connected to each other support splitting in limited dimensions and another one does not support splitting, or both the two operators do not support splitting, the splitting methods of the two operators are not supported with each other, and the tensor data of the two operators may not be split, and the split states in the corresponding split state sets are only the split states corresponding to the original tensor data.

For an operator, in the case that the split states in the split state set of the corresponding output tensor data have been determined, the split states in the split state set of the input tensor data may be determined according to the computational logic of the operator and the split states in the split state set of the corresponding output tensor data. For example, in the FIG.6, split states in a split state set T0 of the input tensor data of the operator Op0 may be determined according to the computational logic of the operator Op0 and the split states in the split state set T1 of the corresponding output tensor data. Assuming that the operator Op1 is an operator that only supports splitting in limited dimensions and corresponding limited split states of a split state set T1 have been determined and the operator Op0 is an operator that supports splitting in any dimension, the split states in the split state set T0 may be obtained by intersecting all the split states in the split state set T1 and the operator Op0.

In an optional embodiment, the split states in the original split state set of the output tensor data of the target operator in the calculation grasp corresponding to the neural network model may be determined according to the computational logic of the operator and the split states in the split state set of the corresponding input tensor data.

Similarly, in the case that the split states in the split state set of the input tensor data of the operator have been determined, the split states in the split state set of the output tensor data may be determined according to the computational logic of the operator and the split states in the split state set of the corresponding input tensor data. For example, in FIG.6, in the case that the split states in the split state set T1 of the input tensor data of the operator Op1 have been determined, split states in a split state set T2 may be determined according to the computational logic of the operator Op1 and the split states in the split state set T1. Assuming that the operator Op1 is an operator that only supports splitting in limited dimensions and the corresponding limited split states of the split state set T1 have been determined, the split states in the split state set T2 are the split states obtained by splitting in the limited dimensions corresponding to the split states in the split state set T1.

The tensor data associated with the target operator may include the input tensor data and the output tensor data, and the split state sets formed by the sub-tensor data obtained by splitting the two tensor data are the original split state sets.

In step 302, the glue operator may be inserted between the target operator and the original split state set to adjust the split states in the split state set of the tensor data of the target operator to obtain the adjusted split state set, where the glue operator is used to convert the sub-tensor data obtained by splitting the tensor data according to one splitting method into the sub-tensor data obtained according to another splitting method;

For obtaining the original split state set corresponding to the tensor data associated with the operator, since the original split state set may be obtained according to the computational logic of the operator itself, or according to the computational logic of the operator and the split states in the original split state set of the input tensor data, or according to the computational logic of the operator and the split states in the original split state set of the output tensor data, no matter which way it adopts, it is closely related to the computational logic of the operator itself. However, the operators connected hierarchically in the neural network model need to share a same original split state set. For example, in FIG. 6, the original split state set T1 is not only the original split state set corresponding to the output tensor data of the operator Op0, but also the original split state set corresponding to the input tensor data of the operator Op1. Since the computational logic of the operator Op0 and the operator Op1 is different and the splitting methods supported are also different, after the splitting method of the input data Tensor1 is determined according to the computational logic of the operator Op1, when the operator Op1 selects the splitting method again, it must be ensured that the method to be selected is compatible with the method determined by the input data Tensor1. Then, it may be understood that the splitting method chosen by the operator Op1 under this constraint may constrain the splitting choices of other adjacent operators through the tensor data associated with it.

The mutual influence between operators on the choice of splitting methods may bring about many problems. First of all, it will bring about performance problems. In practical applications, when the computer device invokes different splitting methods to process the sub-computational tasks on the multi-core processor, there may be a difference in performance. Then, it may be understood that if the optimal splitting methods of two adjacent operators are inconsistent with the splitting methods of their commonly associated tensor data, in order to avoid conflicts, one party must succumb to the choice of the other.

Secondly, the mutual influence of the splitting methods between operators may affect the executability of the entire network. As mentioned above, some operators that are difficult to be implemented, such as NMS operators, are hard to distribute the calculation load to multiple cores in parallel by the operator splitting. Such operators may be executed on a single core ultimately and the corresponding input data may remain intact without splitting. Then, it may be understood that if this type of operator exists in the neural network model, it must be ensured that the input data of the operator remains intact without splitting, otherwise, the network may not continue to execute at the operator. If this constrain spreads with the network structure, it may make it difficult to mine a sufficient degree of parallelism in neural network calculations by means of the operator splitting.

In order to solve the problems brought by the mutual influence between the operator splitting, the glue operator may be inserted between the operator of the target operator and the associated original split state set.With the glue operator, each operator in the calculation graph corresponding to the neural network model may select the splitting method that acts on itself flexibly and unrestrictedly.

The glue operator may be inserted between the original split state set obtained according to the input tensor data and the operator. The original split state set is obtained according to the computational logic of the operator itself, data scale, and the existing associated split state sets. By inserting the glue operator after the original split state set, a third split state set corresponding to the input tensor data may be obtained. The third split state set may include the split states in the original split state set and some new split states that are supported by the operator. Then, by combining the third split state set and the original split state set to ensure that new split state set may include all the split states of both the third split state set and the original split state set, the adjusted split state set corresponding to the input tensor data may be obtained. And then the adjusted split state set may be used to perform operator operations, so that the operator may directly invoke the new split state set without spending extra time to execute the original split state set.

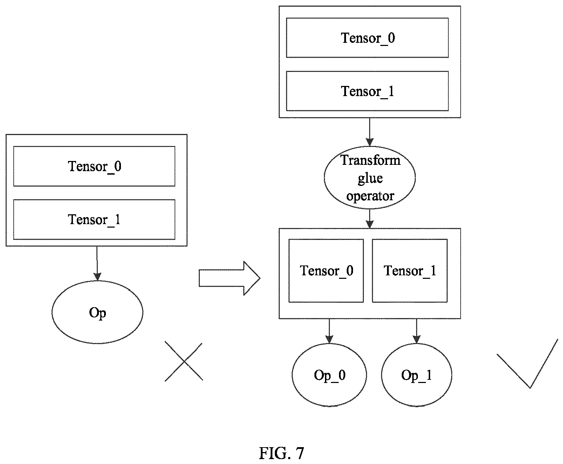

Specifically, inserting the glue operator Transform in the embodiments of the present disclosure may be used to convert the sub-tensor data obtained by splitting the tensor data according to one splitting method into the sub-tensor data according to another splitting method; If the splitting method of the current tensor data is not allowed by any splitting method of the subsequent operators, or when the subsequent operators are compatible with the splitting method of the current tensor data, the performance improvement brought by the optional splitting method is very poor, the Transform may be inserted in the calculation graph to adjust the current data for another better splitting method. FIG. 7 is a schematic diagram of an adjustment process by means of Transform. As shown in FIG. 7, after the sub-tensor data Tensor_0 and Tensor_1 obtained by splitting according to the first method are adjusted by the Transform, the new sub-tensor data obtained by splitting according to the second method may be obtained, where the new sub-tensor data is compatible with the operator 0p_0 and the operator Op_1.

Semantics of Transform may include a common operator Concat and a common operator Split in the neural network. The detailed explanation will be made below.

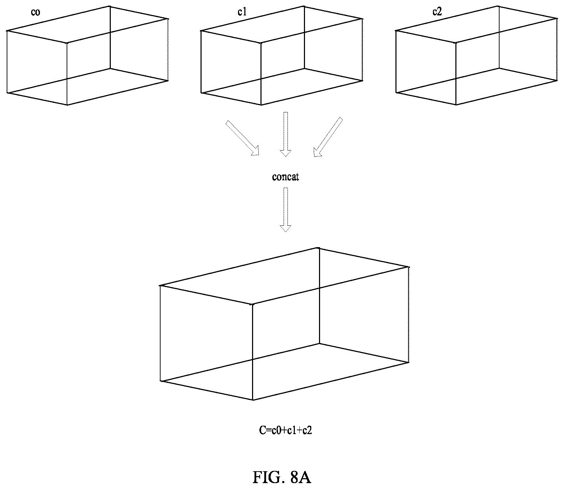

The operator Concat, in some embodiments, concatenation operator, is used to concatenate a plurality of tensor data into a tensor along a specified dimension. In addition to the specified dimension, the other dimensions of the input tensor also should be consistent. By means of the operator Concat, the neural network may concatenate a plurality of tensors representing features from different upstream locations into one, so that these features may be processed together in downstream calculations. Specifically, the detail may be provided with reference to the schematic diagram of semantics of the operator Concat shown in FIG. 8A.

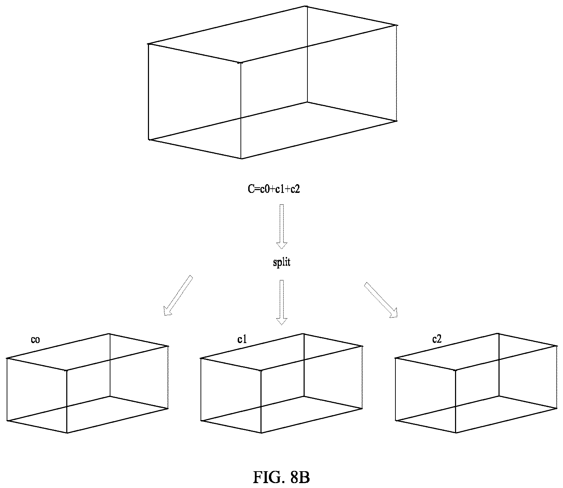

The operator Split, in some embodiments, split operator, is used to split a tensor into a plurality of tensors in a specified dimension. In addition to the specified dimension, the plurality of tensors after the splitting are consistent in other dimensions. By means of the operator Split, the features belonging to a same tensor data may be split into multiple copies, so that they may be processed separately in subsequent calculations. Specifically, the detail may be provided with reference to the schematic diagram of semantics of the operator Split shown in FIG. 8B.

Transform may be implemented in both the concatenation phrase and the splitting phrase. In the concatenation phrase, the operator Concat may be used to concatenate the adjacent sub-tensor data in any dimension into a new sub-tensor data. In the splitting phrase, the operator Split may be used to split any sub-tensor data into several smaller sub-tensors. In this way, the sub-tensor data obtained by splitting the tensor data according to any one method may be converted into the sub-tensor data obtained by splitting the tensor data according to any other method.

In an optional embodiment, adjusting the split states in the split state set of the input tensor data of the operator may include: concatenating the split states in the original split state set.

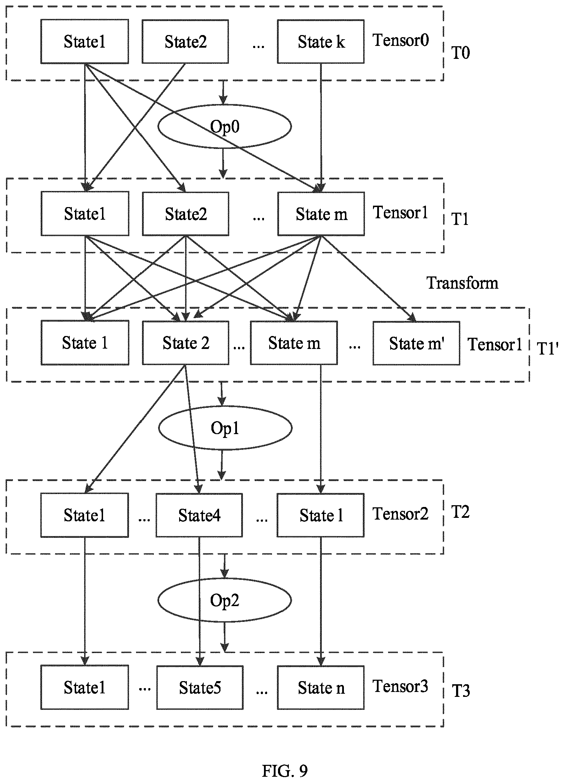

FIG. 9 is a schematic diagram of inserting the Transform to obtain a split state according to an embodiment of the present disclosure. As shown in FIG.9, assuming that an original split state 1 in the original split state set corresponding to the tensor data Tensor1 includes two sub-tensor data, which are an Input1{[0,n/2), [0,ic/2) [0,ih), [0,iw)} and an Input2{[n/2,n), [ic/2,ic) [0,ih), [0,iw)}, after concatenating, tensor data Input{[0,n), [0,ic) [0,ih), [0,iw)} and a corresponding split state 2 may be obtained, which is a process of adjusting the split state through Transform.

In an optional embodiment, adjusting the split states in the split state set of the input tensor data of the target operator may include: splitting the split states in the original split state set.

Specifically, assuming that the split state 1 in the original split state set corresponding to the tensor data Tensor1 includes two sub-tensor data, which are an Input1 {[0,n/2), [0,ic/2) [0,ih), [0,iw)} and an Input2{[n/2,n), [ic/2,ic) [0,ih), [0,iw)}, after splitting, a sub-tensor data Input3{[0,n/4), [0,ic/4) [0,ih), [0,iw)}, a sub-tensor data Input4{[n/4,n/2), [ic/4,ic/2) [0,ih), [0,iw)}, a sub-tensor data Input5{[n/2,3n/4), [ic/2,3ic/4) [0,ih), [0,iw)} and a sub-tensor data Input6{[3n/4,n), [3ic/4,ic) [0,ih), [0,iw)} and a corresponding split state 3 may be obtained, which is a process of adjusting the split state through Transform.

In an optional embodiment, adjusting the split states in the split state set of the tensor data of the operator may include: concatenating the split states of the tensor data in the original split state set first and then splitting the concatenated split states in the split state set.

For the target operator, new split states in the adjusted split state set that needs to be obtained may be different from the original split states in the original split state set in terms of splitting granularity in different dimensions. For example, in n dimension representing the batch size of the input data, the new split states may require a larger degree of granularity, while in ih dimension representing the length of the input data feature map, the new split states may require a smaller degree of granularity, therefore, when adjusting through Transform, the sub-tensor data corresponding to the original split states needs to be concatenated first and then split to obtain new split states, so that a process of adjusting the split state through Transform may be completed.

In an optional embodiment, adjusting the split states in the split state set of the target operator may include: splitting the split states in the original split state set first and then concatenating the split states that are split in the split state set.

Similarly, for the problem that new split states in the adjusted split state set may be different from the original split states in the original split state set in terms of splitting granularity in different dimensions, the sub-tensor data corresponding to the original split states may be split first and then concatenated. For example, in n dimension, the new split states may require a smaller degree of granularity, while in ih dimension, the new split states may require a larger degree of granularity, therefore, the sub-tensor data corresponding to the original split states needs to be split first and then concatenated to obtain new split states, so that a process of adjusting the split state through Transform may be completed.

Clearly, in the embodiments of the present disclosure, the sub-tensor data corresponding to the original split states in the original split state set may be split and concatenated through the glue operator Transform, or split first and then concatenated, or concatenated first and then split, so as to convert the original split states in the original split state set to the new split states in the adjusted split state set, which may enable the adjusted split state set to be better compatible with operators and reduce the unexecutablity when the artificial intelligence processor invokes the neural network model.

In step 303, the split state sets of the tensor data associated with the target operator may be traversed to determine the splitting paths of the tensor data of the target operator between adjacent split state sets.

In the calculation graph corresponding to the neural network model, the target operators corresponding to a plurality of target layers may be included, and the operator Transform may be inserted between all the target operators and the original split state sets and between part of the target operators and the original split state sets. If the operator Transform is inserted between all the target operators and the original split state sets, the split states of the tensor data of the target operator may be determined totally according to the adjusted split state sets; if the operator Transform is inserted between part of the target operators and the original split state sets, the split states of the tensor data of the target operator may be determined according to part of the original split state sets and the adjusted split state sets.

If the operator Transform is inserted between part of the target operators and the original split state sets and the operator Transform is not inserted between the other part of the target operators and the original split state sets, the splitting path between adjacent split state sets may be determined by traversing both the adjusted split state sets obtained after inserting the operator Transform and the original spit state sets without inserting the operator Transform. As shown in FIG.9, when the operator Transform is inserted between the original split state set and the target operator Op1 to obtain the adjusted split state set T1', the split state sets of the splitting path between adjacent split state sets that needs to be determined by traversing may include T0, T1', T2, and T3.

If the operator Transform is inserted between all the target operators and the original split state sets, the splitting path between adjacent split state sets may be determined by traversing all the adjusted split state sets. For example, in FIG.9, when the operator Transform is inserted between the original split state sets T0, T1, T2, T3 and the operators Op0, Op1, Op2, Op3 respectively to obtain the adjusted split state sets T0', T1', T2', and T3', the split state sets of the splitting path between adjacent split state sets that needs to be determined by traversing may include T0', T1', T2', and T3'.

In addition to inserting the glue operator between the target operator and the corresponding input tensor data, the glue operator may also be inserted between the target operator and the corresponding output tensor data, and even the glue operator may be inserted among the target operator, the corresponding input tensor data and the corresponding output tensor data. The above methods are only an incomplete, not exhaustive, list of examples. Those of ordinary skill in the art may make modifications or variations within the spirit and principle of the disclosure. As long as functions and technical effects realized by the modifications or variations are similar to those of the present disclosure, the modifications or variations shall fall within the scope of protection of the present disclosure.

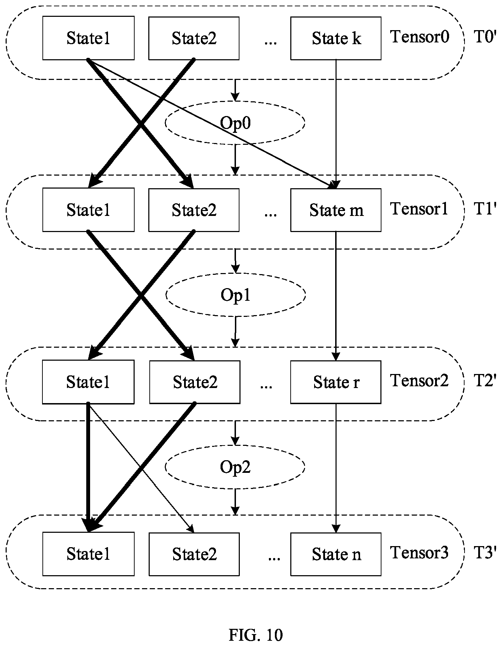

The path represents the intermediate process from the input tensor data to the output tensor data, while the splitting path represents the intermediate process from the split state to the split state between adjacent split state sets. FIG. 10 is a schematic diagram of a splitting path between split states according to an embodiment of the present disclosure. As shown in FIG. 10, when the operator Transform is inserted between all the target operators and the original split state sets in the calculation graph corresponding to the neural network model, there exist the directed edges between the split states in the adjusted split state set of the tensor data associated with the target operator. For example, between an adjusted split state set T1' and an adjusted split state set T2' corresponding to the operator Op1, there exists a directed edge from T1': State 1 to T2': State2, where the directed edge may have two meanings: one represents the connection relationship between operators; the other represents the execution sequence of the artificial intelligence processor in executing the neural network model. For the first meaning, it means that if there is a directed edge between the split states, then there is a connection relationship between the operators corresponding to the split states, and the operators with the connection relationship are adjacent and related to each other. For the second meaning, it means that if there is a directed edge between the split states, then the direction in which the directed edge points corresponds to the execution sequence of the operators in the neural network model on the processor.

In FIG.10, the dashed box represents the adjusted split state set of each tensor data. The adjusted split state set of each tensor data may include several split states, which come from the split state space of the tensor data. Each directed edge between the split states in the split state set of the input tensor data of the operator and the split states in the split state set of the output tensor data represents the splitting method of the operator itself, and the parallel execution time based on this splitting method may be used as a weight of the directed edge. A Tensor0' is the input tensor of the entire network, and a Tensor3' is the output tensor data of the entire network. Any one path that starts from any state in the state set of the Tensor0' and ends with any state in the state set of theTensor3' corresponds to an effective splitting solution of the neural network, which is denoted as a P. For a given neural network model, searching for a good splitting solution is to find a target path from the state of the Tensor0' to the state of the Tensor3' in FIG.10.

In this technical solution, the directed edge between the split states has the weight, in some embodiments, the weight of the splitting path. The weight of each splitting path is based on the computational method of the operator and the parallel execution time of the corresponding split sub-tensor data on the neural network multi-core processor. When determining the time, on the one hand, the scale of the operator itself should be considered, and on the other hand, a plurality of hardware parameters including a memory access bandwidth and an arithmetic frequency should be considered. There is basically no conditional jump in the operators of the neural network model, and the amount of calculation is determined on the premise that the scale of the operator is given. In addition, because of the symmetry of the sub-operators obtained by performing splitting on each core, an equal division method may be used to evaluate the memory access bandwidth obtained by each core in the process of accessing the global storage under the multi-core parallel execution. Therefore, the weight of the splitting path is determined according to the computational type of the operator corresponding to the splitting path, the data scale of the corresponding sub-data obtained by the tensor data of the operator through the splitting path, and a throughput rate and the memory access bandwidth of each processor core.

In practice, in order to ensure the accuracy of the weight of the splitting path, an actual testing method may also be used to obtain the execution time of the operator under various splitting parallels. This is also done because the execution of the operator itself has a certainty. Once the actual time for a certain operator to perform splitting parallels according to a certain method under a certain data scale has been planed and stored, a value of the actual time may be used to represent the weight of the splitting path corresponding to the splitting method of the operator under the data scale.

When the artificial intelligence processor invokes the operator to perform computations, there will be corresponding resource consumption, and the amount of resource consumption is concerned with the computational type of the operator, the data scale of the sub-data obtained by the tensor data of the operator through the splitting path and the throughput rate and memory access bandwidth of each processor core. Therefore, in order to optimize the computational efficiency of the artificial intelligence processor, it is biased to select the directed edge corresponding to the weight that represents the smaller resource consumption.

In step 303, the target splitting path of the tensor data of the target operator may be determined according to the weights of the splitting paths.

After determining the splitting path of the tensor data of the operator between the adjacent split state sets, since the determined splitting path is only the splitting path for the tensor data of a single operator, for a multi-layer structure of the entire neural network model, it is necessary to further obtain the splitting path corresponding to the tensor data.

In practice, a method similar to a Viterbi algorithm may be used to find the shortest path in FIG. 10. The Viterbi algorithm is a dynamic programming algorithm used to find an implicit state sequence that is most likely to generate observation time series. The Viterbi algorithm is widely used in the fields of speech recognition, keyword recognition and communication decoding. The split states in the split state set of the tensor data may be regarded as implicit states in the Viterbi algorithm and the directed edges between the split states as a transition relationship between the implicit states, and weights of directed edges correspond to a logarithmic value of a transition probability between the implicit states.

In the specific implementation, first of all, all operators in the network calculation graph may be traversed from front to back. When the i-th operator is accessed and the shortest path $\left\{ l_{s_i^0}, l_{s_i^1}, ..., l_{s_i^{p-1}} \right\}$ from the split states in the split state set of the input tensor data of the neural network to each split state in the split state set $\left\{ s_i^0, s_i^1, ..., s_i^{p-1} \right\}$ of the input data of the current operator is known, by combining all the directed edges and weights $w_{s_i^u \to s_{i+1}^v}$ corresponding to the current operator, the shortest path $\left\{ l_{s_{i+1}^0}, l_{s_{i+1}^1}, ..., l_{s_{i+1}^{q-1}} \right\}$ from the split states in the split state set of the input tensor data of the neural network to each split state in the split state set $\left\{ s_{i+1}^0, s_{i+1}^1, ..., s_{i+1}^{q-1} \right\}$ of the output data of the current operator may be obtained. Formula (1) is the calculation formula. After completing a traversal of all operators, the shortest paths from the split states in the split state set of the input tensor data of the neural network model to each split state in the split state set of the output tensor data may be obtained. From these shortest paths, the shortest path is selected again, which is a target global shortest path. Finally, the directed edge selected by the shortest path at each operator and the split state at each tensor data may be determined by a backtracking from the output tensor to the input tensor, which is an optimal splitting solution on the calculation graph to be found.

When accessing each operator, the state in the output state set of the current operator is enumerated according to the state in the input state set in combination with a calculation semantics of the operator itself. Specifically, for each split state in the split state set of the input tensor data, possible operator splitting methods that are compatible with the current input state may be enumerated. The split state of the output tensor data corresponding to the possible operator splitting methods will be added to the split state set of the output tensor data. Some operators do not only have a piece of input tensor data. For example, both Convolution and InnerProduction may have up to three input tensors including the input data, the weight and a paranoia, and both BatchNorm and Scale may also have up to three input tensors including the input data, a mean/$\alpha$ and a variance/$\beta$. However, each operator in FIG.7 has only one input and one output. In order to bridge the difference between the two, in the specific implementation, the split states of other input tensors other than the input data may be included in the directed edge of the operator. In other words, although each operator in FIG.7 has only one input and one output, some other auxiliary tensors are implicitly included in the directed edge. This method based on the Viterbi algorithm may reduce the complexity of searching for the optimal splitting solution. Assuming that the neural network model has M layers and the split state set of each tensor data has at most N states, each operator has at most N2 different splitting methods. Take an operation of comparing splitting paths as a basic operation, a time complexity in the case of full traversal is an O(NM), while the time complexity under the Viterbi algorithm is an O(MN2); taking a count of to-be-selected splitting paths to be maintained as an evaluation criterion of space complexity, the space complexity in the case of full traversal is an O(NM), while the space complexity under the Viterbi algorithm is an O(N).

$$ l_{s_{i+1}^v} = \min_{u=0,...,p-1} (l_{s_i^u} + w_{s_i^u \to s_{i+1}^v}) $$

(1).

In an optional embodiment, determining the target splitting path of the tensor data of the target operator may include: traversing all split state sets of the tensor data of the operator associated with the target operator and split state sets of the tensor data of the glue operator, and for a current split state set, traversing each split state in the current split state set to obtain all directed edges directing to the current split state and the splitting path from a split state corresponding to a starting point of the directed edge to the split state of the input tensor data of the target operator or the glue operator; determining the splitting path from the current split state to the split state of the input tensor data of the target operator or the glue operator according to the weight of the directed edge and the weight of the splitting path from an initial split state corresponding to the directed edge to the split state of the input tensor data of the target operator or the glue operator, where the weight of the splitting path is determined according to the weights of all the directed edges corresponding to the splitting path; and after traversing all split sets of the tensor data of the target operator and all split state sets of the tensor data of the glue operator, obtaining the target splitting path of the tensor data of the target operator.

If the glue operator is inserted between all the target operators and the original split state sets, an obtained adjusted split state set is actually the split state set of the tensor data of the glue operator. Therefore, in the entire calculation graph, the split state set of the tensor data of the glue operator is actually needed to be traversed to obtain the directed edge directing to the current split state. For example, as shown in FIG.10, when the target operator is the operator Op2, the split state set of the tensor data associated with the operator Op2 may include T2' and T3'. Assuming that the current split state set is T3', after traversing each split state in T3', the directed edge directing to the current split state may be obtained. Assuming that a current split state is T3': State 1, there are two directed edges directing to the current split state including a directed edge T2': State1→T3': State1 and a directed edge T2': State2→T3': State1, and the splitting path from the split state corresponding to the starting point of the directed edge to the split state of the input tensor data of the target operator may be obtained. For the directed edge T2': State1→T3': State1, the starting point is T0': State1, and the splitting path from the starting point of the directed edge to the split state of the input tensor data of the target operator is T0': State1→T1': State2→T2': State1. For another directed edge T2': State2→T3': State1, the starting point is T0': State2, and the splitting path from the starting point of the directed edge to the split state of the input tensor data of the target operator is T0': State2→T1': State1→T2': State2, which is a process of forward traversal.

The weight of the splitting path may be obtained according to the weights of all the directed edges included in the splitting path, including summing the weights of all the directed edges, obtaining the product, weighting the sum, or calculating the integral. For example, when summing the weights, for a splitting path T0': State1→T1': State2→T2': State2, a weight of the directed edge T0': State1→T1': State2 is $\omega 1$, a weight of the directed edge T1': State2→T2': State2 is $\omega 2$, and a weight of the splitting path is a sum of the weights of all the directed edges in the splitting path, which is $\omega 11 = \omega 1 + \omega 2$.

For the current split state T3': State1, assuming that weights of the directed edge T2': State1→T3': State1 and the directed edge T2': State2→T3': State1 are $\omega 01$ and $\omega 02$ respectively and there are two splitting paths between the initial split state and the split state of the input tensor data of the target operator,

where a weight of the splitting path T0': State1→T1': State2→T2': State2 is $\omega 11$, and
a weight of the splitting path T0': State2→T1': State1→T2': State2 is $\omega 12$.

There are also two splitting paths between the current split state T3': State1 and the split state of the input tensor data of the target operator,

where a weight of the splitting path T0': State1→T1': State2→T2': State2→T3': State1 is $\omega 21 = \omega 01 + \omega 11$, and
a weight of the splitting path T0': State2→T1': State1→T2': State2→T3': State1 is $\omega 22 = \omega 02 + \omega 12$.

After traversing all the adjusted split sets of the target operator, the target splitting path from the adjusted split state set of the input tensor data of the target operator to the adjusted split state set of the output tensor data of the target operator may be obtained. The target splitting path may be determined according to the weight of the splitting path from the current split state to the split state of the input tensor data of the target operator. The target splitting path is one selected from a plurality of splitting paths, which may be the one with the shortest total consumption time, the one with the least total occupation of memory, or the one with the largest throughput. Corresponding to the splitting path, the one with the largest weight or the one with the smallest weight may be selected.

For example, for the target operator Op2, since two splitting paths from the split state T3': State 1 of the corresponding adjusted split state set to the split state of the input tensor data of the target operator have been determined and the corresponding weights of the two splitting paths are $\omega 21$ and $\omega 22$ respectively, if the weights represent the time consumption of the output tensor data obtained by the operator according to the input tensor data and $\omega 21$ is greater than $\omega 22$, a splitting path corresponding to $\omega 22$ may be selected when a splitting path with the least time consumption needs to be selected. Similarly, for other split states in the adjusted split state set corresponding to the operator Op2, splitting paths from the other split states to the split state of the input tensor data of the target operator may be obtained and the one with the least time consumption may be selected. Then among the splitting paths with the least time consumption corresponding to each split state, the only one with the least time consumption may be selected.

Assuming that the only splitting path with the least time consumption corresponding to the operator Op2 is the splitting path corresponding to $\omega 22$, in this splitting path, a target splitting path from the adjusted split state set of the input tensor data of the operator Op2 to the adjusted split state set of the output tensor data may be determined as T2': State2→T3': State1, in other words, the selection of the target splitting path corresponding to the operator is based on a weight of global splitting path of the neural network model, rather than the weight of the directed edge between the split states in the adjacent split state sets of a single operator.

In an optional embodiment, determining the target splitting path of the tensor data of the target operator may include: traversing all the adjusted split state sets of the target operator and for the current split state set, traversing each split state in the current split state set to obtain all directed edges starting from the current split state and a splitting path from a split state corresponding to an ending point of the directed edge to the split state of the output tensor data of the target operator; determining the splitting path from the current split state to the split state of the output tensor data of the target operator according to the weight of the directed edge and the weight of the splitting path from the split state corresponding to the ending point of the directed edge to the split state of the output tensor data of the target operator, where the weight of the splitting path is determined according to the weights of all the directed edges corresponding to the splitting path; and after traversing all the adjusted split sets of the target operator, obtaining a target splitting path from the adjusted split state set of the input tensor data of the target operator to the adjusted split state set of the output tensor data of the target operator.

For the adjusted split state set of the target operator, all the directed edges starting from the current split state may be obtained through traversal. Referring to FIG.10, when the target operator is the operator Op1, the adjusted split state set of the tensor data associated with the operator Op1 may include T1' and T2'. Assuming that the current adjusted split state set is T1', after traversing each split state in T1', the directed edge starting from the current split state may be obtained. Assuming that the current split state is T1': State 1, there is one directed edge starting from the current split state, which is T1': State 1→T2': State2, and the splitting path from the split state corresponding to the ending point of the directed edge to the split state of the output tensor data of the target operator may be obtained. For a directed edge T1': State1→T2': State2, the ending point is T3': State 1, and the splitting path from the ending point of the directed edge to the split state of the output tensor data of the target operator is T2': State2→T3': State1. This is a process of backward traversal.

The weight of the splitting path may be obtained according to the weights of all the directed edges included in the splitting path, including summing the weights of all the directed edges, obtaining the product, weighting the sum, or calculating the integral. For example, when summing the weights, for the splitting path T2': State2→T3': State 1, where there only includes one directed edge, the weight of the splitting path is equal to the weight of the directed edge.

For the current split state T1': State1, assuming that the weight of the directed edge T1': State1→T2': State2 is $\omega 31$ and there is one splitting path from the split state corresponding to the ending point of the directed edge to the split state of the output tensor data of the target operator, which is T2': State2→T3': State 1, where the corresponding weight is $\omega 41$, the splitting path from the current split state T1': State 1 to the split state of the output tensor data of the target operator is T1': State1→T2': State2→T3': State 1 and a corresponding weight is $\omega 51 = \omega 31 + \omega 41$.

After traversing all the adjusted split sets of the target operator, the target splitting path from the adjusted split state set of the input tensor data of the target operator to the adjusted split state set of the output tensor data of the target operator may be obtained.

For the target operator Op1, after traversing all the split states of T1' and T2', a global splitting path corresponding to the target operator Op1 from the directed edge starting from the split state in T1' to the ending point of the directed edge may be obtained, and then according to weights of the global splitting path, one of them may be selected as an optimal splitting path. Similarly, the weights may include a total time consumption, a total occupancy of memory, or a throughput. Corresponding to the splitting path, the one with the largest weight or the one with the smallest weight may be selected as the optimal splitting path. The directed edge corresponding to the adjacent adjusted split state sets of the operator Op1 may be truncated from the optimal splitting path as the target splitting path between the adjusted split state set of the input tensor data of the target operator and the adjusted split state set of the output tensor data of the target operator.

Similarly, for the case that the operator Transform is inserted between part of operators in the calculation graph corresponding to the neural network model, the target splitting path of the tensor data of the target operator may be obtained by traversing both the split state set of the tensor data of the target operator without the operator Transform inserted (for example, the original split state set) and the split state set of the tensor data of the target operator with the operator Transform inserted (for example, the adjusted split state set).

Clearly, in the embodiments of the present disclosure, according to a weight of the splitting path composed of directed edges of global tensor data in the neural network model, the target splitting path of the tensor data of the target operator may be determined. Obtaining the optimal splitting method of the tensor data of the target operator under the premise of a global optimal splitting method may improve the accuracy and adaptability of the splitting of the tensor data and further improve the efficiency of artificial intelligence processors in invoking neural network models and effectively reduce resource consumption overall.

In an optional embodiment, inserting the glue operator between the target operator and the original split state set may also include: selecting each glue operator inserted based on the target splitting path of the target operator in the calculation graph including the glue operator, and deleting the glue operator when states of the input tensor data of the glue operator included in the target splitting path are same with states of the corresponding output tensor data.

In an optional embodiment, inserting the glue operator between the target operator and the original split state set may also include: reserving the glue operator when the states of the input tensor data of the glue operator included in the target splitting path are different from the states of the corresponding output tensor data.

Obtained target splitting paths based on FIG.10 are determined according to the target splitting path of the tensor data of the target operator determined by the adjusted split state set, in other words, the target splitting paths are obtained after inserting the operator Transform. Actually, in some embodiments, the target splitting paths of the target operator may not be obtained after the adjustment of the operator Transform, but obtained in the case of the original split state set. Assuming that an original split state set T0-T1-T2-T3 corresponding to the target operators Op0, Op1, Op2, and Op3 is traversed to obtain a target splitting path of the target operator Op2, which is T2 : State2→T3 : State 1, since the target splitting path of the operator Op2 determined according to the adjusted split state set is T2': State2→T3': State 1, where the splitting method of the tensor data corresponding to T2': State2 is same with the splitting method of the tensor data corresponding to T2 : State2, and the splitting method of the tensor data corresponding to T3': State 1 is same with the splitting method of the tensor data corresponding to T3: State 1, the operator Transform does not play a role in optimizing the splitting method of the tensor data corresponding to the target operator Op2. However, when the artificial intelligence processor executes the neural network model with the operator Transform inserted, an extra overhead may be brought. In order to reduce this unnecessary extra overhead, when split states of the input tensor data corresponding to the operator Transform are same with split states of the output tensor data corresponding to the operator Transform in the obtained target splitting path, the inserted glue operator Transform of the target operator may be deleted to obtain an optimized target splitting path, in other words, it is to obtain the target splitting path according to the original split state set of the target operator.

Accordingly, when the split states of the input tensor data corresponding to the operator Transform is different from the split states of the output tensor data corresponding to the operator Transform in the obtained target splitting path, it is explained that the glue operator Transform plays a role in optimizing the target splitting path, and the glue operator Transform of the target operator may be reserved.

Clearly, in the embodiments of the present disclosure, after obtaining the target splitting path corresponding to the tensor data of the target operator, it needs to be further determined whether the glue operator plays a role in optimizing the target splitting path. If the glue operator plays a role in optimizing the target splitting path, the glue operator of the target operator may be reserved, while if the glue operator does not play a role in optimizing the target splitting path, the glue operator of the target operator may be deleted, which may reduce the extra overhead of the artificial intelligence processor brought by the glue operator and improve the execution efficiency of the neural network model.

In an optional embodiment, the method may also include the following: when the output tensor data of the current target operator is regarded as the input tensor data by at least two operators, or the current target operator has at least two pieces of output tensor data, the split state set of the output tensor data of the current target operator may reserve one split state, and the split state reserved is determined according to a same directed edge of the current operator.

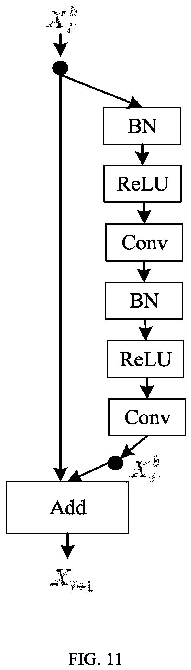

In some embodiments, the output tensor data of the target operator may be regarded as the input tensor data by at least two operators, or the current target operator may have at least two pieces of output tensor data. FIG. 11 is a schematic diagram of a residual block in a deep residual network according to an embodiment of the present disclosure. As shown in FIG.11, an output tensor data of an operator in the front $X_l$ is regarded as the input tensor data by an operator Add at the bottom, and a batch-normalized operator BN is regarded as the input tensor data. For the operator Add and the operator BN, split states that are supported by the operator Add and the operator BN are different. When performing the forward traversal, respective split state sets of the input tensor data of both the operator Add and the operator BN may be obtained, and the splitting path may be decided according to the weight of the directed edge during the forward traversal, and split state sets corresponding the input tensor data that support the operator Add and the operator BN may be selected. However, when performing the backtracking, split state sets of the input tensor data corresponding to the operator Add and split state sets of the input tensor data corresponding to an output tensor data $X_l^b$ may be obtained simultaneously. In order to ensure that there is no conflict in a selection of $X_l$ during the backtracking, for the split state sets of $X_l$, only one of the split states may be reserved and the reserved split state may be determined according to the same directed edge of the operator, in other words, the split state reserved may be determined according to split states in a split state set whose split states direct to $X_l$ in the split state sets corresponding to the input tensor data of the operator in the front.

In an optional embodiment, the method may also include the following: when the current target operator has at least two pieces of input tensor data, one of the split states in the split state set of the input tensor data of the current target operator may be reserved and the reserved split state may be determined according to the same directed edge of the current operator.

Similarly, if the current target operator has a plurality of pieces of input tensor data, each tensor data has its corresponding split state set. However, when performing the backtracking, a plurality of selectable split states of the current operator may be obtained. In order to ensure that there is no conflict between split states of the input tensor data of the operator, one of the split states in the split state set of the input tensor data of the operator may be reserved, and the split state reserved may be determined according to the same directed edge of the operator.

In step 304, the tensor data of the target operator in the neural network model may be split according to the target splitting path to distribute the tensor data to the corresponding core of the multi-core processor for processing.

The target splitting path is the splitting path corresponding to the target operator in a global optimal splitting path. Therefore, all the target splitting paths of the neural network model may form the global optimal splitting path. The tensor data of the operator may be split according to the optimal splitting path to further obtain the optimal splitting method of the operator.

After splitting the tensor data of the operator, split sub-operators may be executed in parallel by invoking the split sub-tensor data on multiple cores, which may improve the execution efficiency of the neural network model. Additionally, the nucleus number of the multi-core structure is usually an integer power of 2, for example, 1, 2, 4, 8, and 16. A task whose degree of parallelism is not an integer power of 2 will often cause "fragments" in the core scheduling. Therefore, the number of the split sub-operators should be the integer power of 2. The splitting number of the operator may be determined according to the number of sub-tensor data included in the split state. For example, the split state s (Input1, Input2) in FIG.5 includes two pieces of input sub-tensor data, in other words, the operator is split into two sub-operators.

Clearly, in the embodiments of the present disclosure, the original split state set of the tensor data associated with the target operator may be determined according to the operator of the target operator in the calculation graph corresponding to the neural network model; the glue operator may be inserted between the target operator and the original split state set to adjust the split states in the split state set of the tensor data of the target operator to obtain the adjusted split state set; then the split state set of the tensor data associated with the target operator may be traversed to determine the splitting path of the tensor data of the target operator between the adjacent split state sets and the weight of the splitting path; and then according to the weight of the splitting path, the target splitting path of the tensor data of the target operator may be determined; and finally according to the target splitting path, the tensor data of the target operator of the neural network model may be split to distribute the tensor data to the corresponding core of the multi-core processor for processing. On the one hand, through splitting operators by splitting the tensor data corresponding to the operators, the modification and reconstruction of original instruction implementations of each operator may be avoided when the operators are split in parallel on multiple cores. In this process, in order to reduce the mutual constraints between interconnected layers in the neural network model due to the different splitting methods of the tensor data caused by different operator characteristics, the glue operator is added to adjust the splitting methods of the tensor data to increase the executability of the neural network processor in invoking the neural network model. On the other hand, through splitting the tensor data associated with the operator, the computational data scale of the operator may be reduced, and then according to the selection of the splitting path corresponding to the split states of the tensor data, the splitting method of the tensor data may be further optimized. Finally, through distributing the tensor data obtained by the splitting to the multi-core processor, the hardware resources of each core in the multi-core processor may be effectively utilized. This solution may effectively reduce an end-to-end delay of various neural network models on the multi-core processor.

It should be noted that for the sake of conciseness, the foregoing method embodiments are all described as a series of combinations of actions, but those skilled in the art should know that the present disclosure is not limited by the described order of action since the steps may be performed in a different order or simultaneously according to the present disclosure. Secondly, those skilled in the art should also understand that the examples described in the specification are all optional, and the actions and modules involved are not necessarily required for this disclosure.

Furtherer, it should be explained that though the steps in the flowchart FIG. 3 are shown by following the direction of arrows, yet these steps may not necessarily be performed according to the order indicated by the arrows. Unless clearly stated herein, the order for performing these steps is not strictly restricted. These steps may be performed in a different order. Additionally, at least part of the steps shown in FIG. 3 may include a plurality of sub-steps or a plurality of stages. These sub-steps or stages may not necessarily be performed and completed at the same time, instead, these sub-steps or stages may be performed at different time. These sub-steps or stages may not necessarily be performed sequentially either, instead, these sub-steps or stages may be performed in turn or alternately with at least part of other steps, or sub-steps of other steps, or stages.

The foregoing describes the methods of the embodiments of the present disclosure in detail. In order to facilitate better implementation of the above solutions of the embodiments of the present disclosure, correspondingly, related apparatuses for cooperating with the implementation of the foregoing solutions are also provided below.

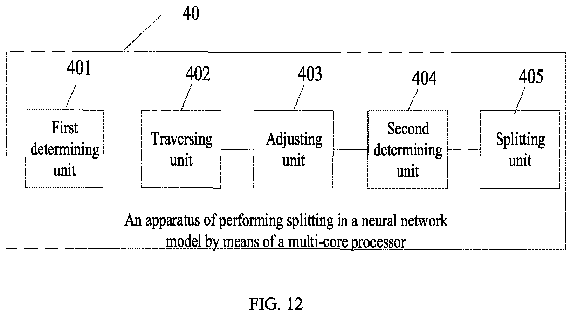

Referring to FIG. 12, FIG. 12 is a schematic structural diagram of an apparatus of performing splitting in a neural network model by means of a multi-core processor according to an embodiment of the present disclosure. An apparatus 40 may at least include:

> a first determining unit 401 configured to determine the original split state set of the tensor data associated with the target operator according to the target operator in the calculation graph corresponding to the neural network model;
> an adjusting unit 402 configured to insert the glue operator between the operator of the target operator and the original split state set to adjust the split states in the split state set of the tensor data of the target operator to obtain the adjusted split state set, where the glue operator is used to convert the sub-tensor data obtained by splitting the tensor data according to one splitting method into the sub-tensor data obtained according to another splitting method;
a traversing unit 403 configured to traverse the split state sets of the tensor data associated with the target operator to determine the splitting paths of the tensor data of the target operator between the adjacent split state sets;
a second determining unit 404 configured to determine the target splitting path of the tensor data of the target operator according to the weights of the splitting paths; and
a splitting unit 405 configured to split the tensor data of the target operator according to the target splitting method, so as to distribute the tensor data to the corresponding core of the multi-core processor for processing.

In a possible implementation, for adjusting the split states in the split state set of the tensor data of the operator, the adjusting unit 402 may be specifically configured to:
concatenate the split states in the original split state set.
In a possible implementation, for adjusting the split states in the split state set of the tensor data of the operator, the adjusting unit 402 is specifically configured to:
split the split states in the original split state set.
In a possible implementation, for adjusting the split states in the split state set of the tensor data of the operator, the adjusting unit 402 may be specifically configured to:
concatenate the split states in the original split state set first and then split the concatenated split states in the split state set.
In a possible implementation, for adjusting the split states in the split state set of the tensor data of the operator, the adjusting unit 402 is specifically configured to:
split the split states in the original split state set first and then concatenate the split states that are split in the split state set.
In a possible implementation, the adjusting unit 402 may be further configured to:
select each glue operator inserted based on the target splitting path of the target operator in the calculation graph including the glue operator and delete the glue operator when the split states of the input tensor data of the glue operator included in the target splitting path are same as the split states of the corresponding output tensor data.
In a possible implementation, the adjusting unit 402 may be further configured to:
reserve the glue operator when the split states of the input tensor data of the glue operator included in the target splitting path are different from the split states of the corresponding output tensor data.
In a possible implementation, the second determining unit 404 may be specifically configured to:

traverse all the split state sets of the tensor data of the target operator and all the split state sets of the tensor data of the glue operator and for the current split state set, traverse each split state to obtain all the directed edges directing to the current split state and the splitting path from the split state corresponding to the starting point of the directed edge to the split state of the input tensor data of the target operator or the glue operator;
determine the splitting path from the current split state to the split state of the input tensor data of the target operator or the glue operator according to the weight of the directed edge and the weight of the splitting path from the initial split state corresponding to the directed edge to the split state of the input tensor data of the target operator or the glue operator, where the weight of the splitting path is determined according to the weights of all the directed edges corresponding to the splitting path; and
after traversing all the split state sets of the tensor data of the target operator and all the split state sets of the tensor data of the glue operator, obtain the target splitting path of the tensor data of the target operator.

In a possible implementation, the second determining unit 404 may be specifically configured to:

traverse all the split state sets of the tensor data of the target operator and all the split state sets of the tensor data of the glue operator and for the current split state set, traverse each split state to obtain all the directed edges starting from the current split state and the splitting path from the split state corresponding to the ending point of the directed edge to the split state of the output tensor data of the target operator or the glue operator;
determine the splitting path from the current split state to the split state of the output tensor data of the target operator or the glue operator according to the weight of the directed edge and the weight of the splitting path from the split state corresponding to the ending point of the directed edge to the split state of the output tensor data of the target operator or the glue operator, where the weight of the splitting path is determined according to the weights of all the directed edges corresponding to the splitting path; and
after traversing all the split state sets of the tensor data of the target operator and all the split state sets of the tensor data of the glue operator, obtain the target splitting path of the tensor data of the target operator.

In a possible implementation, the second determining unit 404 may be further configured to:
reserve one split state in the split state set of the output tensor data of the current target operator when the output tensor data of the current target operator is regarded as the input tensor data by at least two operators, or the current target operator has at least two pieces of output tensor data, where the split state reserved is determined according to the same directed edge of the current target operator.

In a possible implementation, the second determining unit 404 may be further configured to:

reserve one split state in the split state set of the input tensor data of the current target operator when the current target operator has at least two pieces of input tensor data, where the reserved split state is determined according to the same directed edge of the current operator.

It should be understood that the foregoing apparatus embodiments are only illustrative, and the apparatus of the present disclosure may also be implemented in other ways. For example, the division of the units/modules in the foregoing embodiment is only a logical function division, and there may be other division methods in actual implementation. For example, a plurality of units, modules, or components may be combined or integrated into another system, or some features may be omitted or not implemented.

The units or modules described as separation components may or may not be physically separated. The components described as units or modules may or may not be physical units, in other words, the components may be located in one apparatus, or may be distributed on a plurality of apparatuses. The solutions of the embodiments of the present disclosure may be implemented by selecting some or all of the units according to actual needs.

The embodiments of the present disclosure also provide a chip, and the neural network chip may be a multi-core chip, including a CPU and a neural network processors (NNP) with N single-core, where N is an integer greater than 1. The CPU is used for overall control and scheduling of the chip and is the main body of execution of the neural network model processing method in the embodiments of the present disclosure.

The embodiments of the present disclosure also provide a computer device including the chip or the neural network model processing apparatus 40.

The embodiments of the present disclosure also provide a computer storage medium for storing computer software instructions used by the computer device shown in FIG. 2 above, which includes a program for executing the above method embodiments. By executing the stored program, the neural network model may be optimized according to the position relationship of the glue operator in the neural network model to improve the overall performance of the neural network model. When the computer device invokes the optimized neural network model, since no redundant operation needs to be performed, the resource consumption of the computer device may be reduced.

Based on the above description, the operator splitting method, apparatus, computer device and computer storage medium provided by the embodiments of the present disclosure may be known. The method may optimize the neural network model according to the position relationship of the glue operator in the neural network model to improve the overall performance of the neural network model. When the computer device invokes the optimized neural network model, since no redundant operation needs to be performed, the resource consumption of the computer device may be reduced.

Those skilled in the art should understand that the embodiments of the present disclosure may be provided as a method, a system, or a computer program product. Therefore, the present disclosure may be implemented wholly in a form of hardware, or wholly in a form of software, or in a form of combining software and hardware. In addition, the present disclosure may be realized in a form that a computer program product is implemented by using one or more computer usable storage media (including but not limited to a disk storage and an optical storage) that store computer usable program codes.

The present disclosure is described according to the flowcharts and/or the block diagrams of the method, the equipment (system), and the computer program product of the embodiments of the present disclosure. It should be understood that each step and/or block of the flowcharts and/or the block diagrams, and a combination of a step and/or block of the flowcharts and/or the block diagrams may be realized by the computer program instructions. The computer program instructions may be provided to the processor of a general-purpose computer, a special-purpose computer, an embedded computer, or another programmable data processing device for generating a machine, so that the processor of the computer or the other programmable data processing device may execute the instructions to generate an apparatus for realizing a specified function of a step or a plurality of steps in the flowcharts and/or one or more blocks in the block diagrams.

These computer program instructions may also be stored in a computer readable memory that may direct the computer or the other programmable data processing device to work in a particular manner, so that the instructions stored in the computer readable memory may produce a product including an instruction device. The instruction device may implement the functions specified in one or more steps in the flowcharts and/or one or more blocks of the block diagrams.

These computer program instructions may also be loaded onto the computer or the other programmable data processing device so that a series of operational steps may be performed on the computer or the other programmable device to generate computer-implemented processing. In this way, the instructions to be executed by the computer or the other programmable device may provide steps of the functions specified in one or more steps in the flowcharts and/or one or more blocks of the block diagrams.

**Claims**

1. A method of performing splitting in a neural network model by means of a multi-core processor, comprising:

   determining an original split state set of tensor data associated with a target operator according to the target operator in a calculation graph corresponding to the neural network model;
   inserting a glue operator between the target operator and the original split state set to adjust split states in the split state set of the tensor data of the target operator to obtain an adjusted split state set, where the glue operator is used to convert sub-tensor data obtained by splitting the tensor data according to one splitting method into sub-tensor data obtained according to another splitting method;
   traversing split state sets of the tensor data associated with the target operator to determine splitting paths of the tensor data of the target operator between adjacent split state sets;
   determining a target splitting path of the tensor data of the target operator according to weights of the splitting paths; and
   splitting the tensor data of the target operator according to the target splitting path to distribute the tensor data to the corresponding core of the multi-core processor for processing.

2. The method of claim 1, wherein adjusting the split states in the split state set of the tensor data of the target operator includes:
   concatenating the split states in the original split state set.

3. The method of claim 1, wherein adjusting the split states in the split state set of the tensor data of the target operator includes: splitting the split states in the original split state set.

4. The method of claim 1, wherein adjusting the split states in the split state set of the target operator includes: concatenating the split states in the original split state set first and then splitting the concatenated split states in the split state set.

5. The method of claim 1, wherein adjusting the split states in the split state set of the target operator includes: splitting the split states in the original split state set first and then concatenating the split states that are split in the split state set.

6. The method of any one of claims 2 to 5, wherein inserting the glue operator between the target operator and the original split state set also includes:
   selecting each glue operator inserted based on the target splitting path of the target operator in the calculation graph including the glue operator and delete the glue operator when the split states of the input tensor data of the glue operator included in the target splitting path are same as the split states of the corresponding output tensor data.

7. The method of claim 6, wherein inserting the glue operator between the target operator and the original split state set also includes:
   reserving the glue operator when the split states of the input tensor data of the glue operator included in the target splitting path are different from the split states of the corresponding output tensor data.

8. The method of claim 1, wherein steps of determining the target splitting path of the tensor data of the target operator include:

   traversing all split state sets of the tensor data of the target operator and all split state sets of tensor data of the glue operator, and for a current split state set, traversing each split state to obtain all directed edges directing to the current split state and splitting paths from split states corresponding to starting points of the directed edges to split states of input tensor data of the target operator or the glue operator;
   determining splitting paths from the current split state to the split states of the input tensor data of the target operator or the glue operator according to weights of the directed edges and weights of splitting paths from initial split states corresponding to the directed edges to the split states of the input tensor data of the target operator or the glue operator, wherein the weights of the splitting paths are determined according to the weights of all the directed edges corresponding to the splitting paths; and
   after traversing all the split state sets of the tensor data of the target operator and all the split state sets of the tensor data of the glue operator, obtaining the target splitting path of the tensor data of the target operator.

9. The method of claim 1, wherein steps of determining the target splitting path of the tensor data of the target operator include:

traversing all split state sets of the tensor data of the target operator and all split state sets of tensor data of the glue operator, and for a current split state set, traversing each split state to obtain all directed edges starting from the current split state and splitting paths from split states corresponding to ending points of the directed edges to split states of output tensor data of the target operator or the glue operator;

determining splitting paths from the current split state to the split states of the output tensor data of the target operator or the glue operator according to weights of the directed edges and weights of splitting paths from the split states corresponding to the ending points of the directed edges to the split states of the output tensor data of the target operator or the glue operator, wherein the weights of the splitting paths are determined according to the weights of all the directed edges corresponding to the splitting paths; and

after traversing all the split state sets of the tensor data of the target operator and all the split state sets of the tensor data of the glue operator, obtaining the target splitting path of the tensor data of the target operator.

10. The method of claim 9, further comprising:
reserving one split state in a split state set of output tensor data of the current target operator when the output tensor data of the current target operator is regarded as the input tensor data by at least two operators, or the current target operator has at least two pieces of output tensor data, where the split state reserved is determined according to a same directed edge of the current target operator.

11. The method of claim 10, further comprising:
reserving one split state in a split state set of input tensor data of the current target operator when the current target operator has at least two pieces of input tensor data, wherein the split state is determined according to the same directed edge of the current target operator.

12. An apparatus of performing splitting in a neural network model by means of a multi-core processor, comprising:

a first determining unit configured to determine an original split state set of tensor data associated with a target operator according to the target operator in a calculation graph corresponding to the neural network model;

an adjusting unit configured to insert a glue operator between the target operator and the original split state set to adjust split states in the split state set of the tensor data of the target operator to obtain an adjusted split state set, wherein the glue operator is used to convert sub-tensor data obtained by splitting the tensor data according to one splitting method into sub-tensor data obtained according to another splitting method;

a traversing unit configured to traverse split state sets of the tensor data associated with the target operator to determine splitting paths of the tensor data of the target operator between adjacent split state sets;

a second determining unit configured to determine a target splitting path of the tensor data of the target operator according to weights of the splitting paths; and

a splitting unit configured to split the tensor data of the target operator according to the target splitting method to distribute the tensor data to the corresponding core of the multi-core processor for processing.

13. The apparatus of claim 12, wherein for adjusting the split states in the split state set of the tensor data of the operator, the adjusting unit is specifically configured to concatenate the split states in the original split state set.

14. The apparatus of claim 12, wherein for adjusting the split states in the split state set of the tensor data of the operator, the adjusting unit is specifically configured to split the split states in the original split state set.

15. The apparatus of claim 12, wherein for adjusting the split states in the split state set of the tensor data of the operator, the adjusting unit is specifically configured to:
concatenate the split states in the original split state set first and then split the concatenated split states in the split state set.

16. A chip, wherein the chip integrates the apparatus of performing splitting in the neural network model by means of the multi-core processor of any one of claims 12 to 15.

17. A computer device, wherein the computer device includes the chip of claim 16 or the apparatus of performing splitting in the neural network model by means of the multi-core processor of any one of claims 12 to 15.

18. A computer device, wherein the computer device includes a processor and a memory that are connected to each other, wherein the processor includes a general-purpose processor and an artificial intelligence processor, the memory is configured to store a computer program which includes a program instruction, and the processor is configured to invoke the program instruction to perform the method of any one of claims 1 to 11.

19. A computer readable storage medium, on which a computer program is stored, wherein the computer program includes a program instruction, and the program instruction enables a processor to implement the method of any one of claims 1 to 11 when the program instruction is executed by the processor.

20. A computer program product, wherein the computer program product includes a non-transitory computer readable storage medium storing a computer program, and the computer program enables a computer to perform the method of any one of claims 1 to 11.

100     Artificial intelligence application

102     Artificial intelligence framework

104     Artificial intelligence learning library

106     Artificial intelligence runtime library

108     Driver

FIG. 1A

FIG. 1B

Input
[0,n]
[0,ic]
[0,ih]
[0,iw]

Weight
[0,oc]
[0,ic]
[0,kh]
[0,kw]

Convolutional
operator

Output
[0,n]
[0,oc]
[0,oh]
[0,ow]

FIG. 1C

| Input | Output | Weight |
|-------|--------|--------|
| [0,n/2] | [n/2,n] | [0,oc] |
| [0,ic/2] | [ic/2,ic] | [0,ic] |
| [0,ih] | [0,ih] | [0,kh] |
| [0,iw] | [0,iw] | [0,kw] |

Convolutional operator

Convolutional operator

| Part of output | Part of output |
|----------------|----------------|
| [0,n/2] | [n/2,n] |
| [0,oc] | [0,oc] |
| [0,oh] | [0,oh] |
| [0,ow] | [0,ow] |

FIG. 1D

| Input<br>[0,n]<br>[0,ic]<br>[0,ih]<br>[0,iw] | Weight<br>[0,oc/2]<br>[0,ic]<br>[0,kh]<br>[0,kw] | Weight<br>[oc/2,oc]<br>[0,ic]<br>[0,kh]<br>[0,kw] |

Convolutional operator     Convolutional operator

| Part of<br>output<br>[0,n]<br>[0,oc/2]<br>[0,oh]<br>[0,ow] | Part of<br>output<br>[0,n]<br>[oc/2,oc]<br>[0,oh]<br>[0,ow] |

FIG. 1E

| Input | Output | Weight |
|---|---|---|
| [0,n] | [0,n] | [0,oc] |
| [0,ic/2] | [ic/2,ic] | [0,ic] |
| [0,ih] | [0,ih] | [0,kh] |
| [0,iw] | [0,iw] | [0,kw] |

Convolutional operator

Convolutional operator

| Part of output | Part of output |
|---|---|
| [0,n] | [0,n] |
| [0,oc] | [0,oc] |
| [0,oh] | [0,oh] |
| [0,ow] | [0,ow] |

Accumulation

Output
[0,n]
[0,oc]
[0,oh]
[0,ow]

FIG. 1F

Input
[0,n]
[0,ic]
[0,ih/2]
[0,iw]

Input
[0,n]
[ic,ic]
[ih/2,ih]
[0,iw]

Weight
[0,oc]
[0,ic]
[0,kh]
[0,kw]

Convolutional
operator

Convolutional
operator

Part of
output
[0,n]
[0,oc]
[0,oh/2]
[0,ow]

Part of output
[0,n]
[0,oc]
[oh/2,oh]
[0,ow]

FIG. 1G

| Input<br>[0,n]<br>[0,ic]<br>[0,ih]<br>[0,iw/2] | Input<br>[0,n]<br>[ic,ic]<br>[ih,ih]<br>[iw/2,iw] | Weight<br>[0,oc]<br>[0,ic]<br>[0,kh]<br>[0,kw] |

Convolutional operator    Convolutional operator

| Part of<br>output<br>[0,n]<br>[0,oc]<br>[0,oh/2]<br>[0,ow] | Part of output<br>[0,n]<br>[0,oc]<br>[oh/2,oh]<br>[0,ow] |

FIG. 1H

201                                     205

| Processor | | Artificial intelligence processor |

203

| Memory | 202 | Communication interface | 204 |

Computer device

FIG. 2

According to an operator of a target layer in a calculation graph corresponding to a neural network model, determine a first split state set of tensor data associated with the operator of the target layer, where the target layer is at least one layer in the neural network model | S301

According to an operator of a target layer in a calculation graph corresponding to a neural network model, determine a first split state set of tensor data associated with the operator of the target layer, where the target layer is at least one layer in the neural network model

Insert a glue operator between the operator of the target layer and the first split state set to adjust split states in the split state set of the tensor data of the operator to obtain a second split state set, where the glue operator is used to convert sub-tensor data obtained by splitting the tensor data according to one splitting method into sub-tensor data obtained according to another splitting method | S302

Traverse the second split state set to determine splitting paths of the tensor data of the operator between adjacent split state sets | S303

According to weights of the splitting paths, determine a target splitting path of the tensor data of the target layer | S304

According to the target splitting path, split the tensor data of the operator of the target layer in the neural network model, so as to distribute the tensor data to a corresponding core of a multi-core processor for processing | S305

FIG. 3

FIG. 4

Input1
[0,n/2]
[0,ic/2]
[0,ih]
[0,iw]

Input2
[n/2,n]
[ic/2,ic]
[0,ih]
[0,iw]

Weight
[0,oc]
[0,ic]
[0,kh]
[0,kw]

Convolutional
operator

Convolutional
operator

Part of output
1
[0,n/2]
[0,oc]
[0,oh]
[0,ow]

Part of output
2
[n/2,n]
[0,oc]
[0,oh]
[0,ow]

FIG. 5

```
┌──────────────────────────────────────────────────────────────┐
│  ┌─────────┐   ┌─────────┐         ┌─────────┐                 │
│  │ State1  │   │ State2  │   ...   │ State k │   Tensor0       │  T0
│  └─────────┘   └─────────┘         └─────────┘                 │
└──────────────────────────────────────────────────────────────┘
                          │
                          ▼
                    ╭───────────╮
                    │    Op0    │
                    ╰───────────╯
                          │
                          ▼
┌──────────────────────────────────────────────────────────────┐
│  ┌─────────┐   ┌─────────┐         ┌─────────┐                 │
│  │ State1  │   │ State2  │   ...   │ State m │   Tensor1       │  T1
│  └─────────┘   └─────────┘         └─────────┘                 │
└──────────────────────────────────────────────────────────────┘
                          │
                          ▼
                    ╭───────────╮
                    │    Op1    │
                    ╰───────────╯
                          │
                          ▼
┌──────────────────────────────────────────────────────────────┐
│  ┌─────────┐   ┌─────────┐         ┌─────────┐                 │
│  │ State1  │   │ State2  │   ...   │ State r │   Tensor2       │  T2
│  └─────────┘   └─────────┘         └─────────┘                 │
└──────────────────────────────────────────────────────────────┘
```

FIG. 6

FIG. 7

co    c1    c2

concat

C=c0+c1+c2

FIG. 8A

C=c0+c1+c2

split

co          c1          c2

FIG. 8B

FIG. 9

FIG. 10

$X_l^b$

BN

ReLU

Conv

BN

ReLU

Conv

$X_l^b$

Add

$X_{l+1}$

FIG. 11

40

401      402      403      404      405

| First determining unit | Traversing unit | Adjusting unit | Second determining unit | Splitting unit |

An apparatus of performing splitting in a neural network model by means of a multi-core processor

FIG. 12

# EP 3 979 143 A1

**INTERNATIONAL SEARCH REPORT**

| International application No. |
| --- |
| **PCT/CN2020/116820** |

## A. CLASSIFICATION OF SUBJECT MATTER

G06N 3/063(2006.01)i

According to International Patent Classification (IPC) or to both national classification and IPC

## B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS, USTXT: 算子, 胶水, 连接, 拼接, 拆分, 路径, 神经网络, 权重, operator , gluewater, connect, join, split, path, NN, neural w network, weight

## C. DOCUMENTS CONSIDERED TO BE RELEVANT

| Category* | Citation of document, with indication, where appropriate, of the relevant passages | Relevant to claim No. |
| --- | --- | --- |
| PX | CN 110689121 A (SHANGHAI CAMBRICON INFORMATION TECHNOLOGY CO., LTD.) 14 January 2020 (2020-01-14)<br>claims 1-14, description, page 6 line 44 - page 7 line 22 | 1-20 |
| Y | CN 109657782 A (CAMBRICON TECHNOLOGIES CO., LTD.) 19 April 2019 (2019-04-19)<br>description, paragraphs [0081]-[0099], [0183], [0223]-[0255], figures 1-9 | 1-5, 12-20 |
| Y | CN 110008950 A (NANJING UNIVERSITY) 12 July 2019 (2019-07-12)<br>description, paragraphs [0038]-[0041] | 1-5, 12-20 |
| A | CN 109299142 A (SUN YAT-SEN UNIVERSITY) 01 February 2019 (2019-02-01)<br>entire document | 1-20 |
| A | US 2019239095 A1 (VERIZON PATENT AND LICENSING INC.) 01 August 2019 (2019-08-01)<br>entire document | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 December 2020** | **28 December 2020** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/116820**

| Patent document cited in search report | | | Publication date (day/month/year) | Patent family member(s) | | | Publication date (day/month/year) |
|---|---|---|---|---|---|---|---|
| CN | 110689121 | A | 14 January 2020 | None | | | |
| CN | 109657782 | A | 19 April 2019 | None | | | |
| CN | 110008950 | A | 12 July 2019 | None | | | |
| CN | 109299142 | A | 01 February 2019 | None | | | |
| US | 2019239095 | A1 | 01 August 2019 | US | 10728773 | B2 | 28 July 2020 |

Form PCT/ISA/210 (patent family annex) (January 2015)